# EUROPEAN PATENT APPLICATION

(11) **EP 2 141 592 A2**
(43) Date of publication of application: **06.01.2010**
(21) Application number: 09172967.3
(22) Date of filing: 20.08.2007
(51) Int. Cl.: G06F 9/46

(54) **System and method for executing and mapping service**

(30) Priority: 10.10.2006 CN 200610149610
(62) Divisional of application: 07800993.3
(71) Applicant: Huawei Technologies Co., Ltd., Longgang District Shenzhen Guangdong 518129 (CN)
(72) Inventor: Shi, Xiaomin, Shenzhen Guangdong 518129 (CN); Li, Yan, Shenzhen Guangdong 518129 (CN); Xu, Wenhua, Shenzhen Guangdong 518129 (CN); Chang, Heng, Shenzhen Guangdong 518129 (CN); Tang, Jie, Shenzhen Guangdong 518129 (CN)
(74) Representative: Charles, Glyndwr

(57) **Abstract**

A system and method for creating service are provided. When creating the new service, the combined abstract service logic is generated based on the present service classification in the classification catalogue of the present service in order to realize the service grade recycle. A system and method for performing service are also provided. When operating the abstract service logic, the abstract service logic is transferred to the concrete service logic, and then the corresponding service is accessed according to the concrete service logic. A system and method for mapping the abstract service are also provided. By using the present invention, the service developing efficiency and flexibility are improved, and it can simply and rapidly develop and dispose the service of the service network in order to effectively guarantee the normal operating for the service network.

## Description

### Field of the Invention

The present invention relates to the technical field of network communication, and in particular to a system and method for creating, executing and mapping a service.

### Background of the Invention

As telecommunication network technologies and users' demands grow, there are diverse needs of service provision. When the diversity of services reaches at some degree, the capability of interaction between different services restricts operators in further development of more complex services. Requestors highly desire a complete service provision chain instead of accessing separately a series of independent service sub-systems. It is particularly difficult to integrate services due to different providers and different technology ideas, methods and courses of the services.

In order to cater to the idea of service management, the industry commonly centers on services to integrate various resources of operators and to uniformly abstract various capabilities and resources of a network to be opened for use by an upper layer service. The appearance of technologies such as specifying the whole life period of the management service provides a technical criterion for ordered management of numerous services, and based upon this, an object of developing the service network is to establish a virtual superposed network at a service plane over a network layer, to abstract and isolate capabilities of an underlying network, and to have the numerous services operated freely over a single service network. Therefore, interaction between services of different requestors can be implemented via this service network.

In the prior art, a service is typically created with a Service Independent Building (SIB) block. The SIB is predefined and standardized, and a procedure of creating a service can be therefore accomplished simply and conveniently. Due to a limited number of SIBs, manufacturers have defined various nonstandard SIBs to support increasingly complex service logic creation, which may cause the reuse of an SIB to be limited only to a specific manufacturer or platform.

There are numerous interactions between services over the existing telecommunication networks. Many services provide similar functions, and also many services can serve as basic components of some other services. However, the service-level reuse can not be implemented in the prior art due to the dissimilarity of services, the difference of service interfaces, etc. A current dealing approach is typically to newly develop a service for the requestor's requirements. This approach is both inefficient and lack of universality in development.

Over a logic network consisting of services, because the service information is registered and classified in a service catalog, dissimilar services can be encapsulated in a uniform way (e.g., Web service) using a service-oriented technology to make interaction between different services become possible. The service information is stored centrally (in a fixed format) in the service catalog. The service information primarily includes: address information on a service, interface description information on a service, and function description information on a service, and may also include provider information on a service, class information on a service, etc. The service catalog can provide address information on a service. If a service requestor needs to request a service, he can obtain an address of the service by inquiring the service catalog. The service catalog can also provide interface description information on the service and function description information on the service. The service requestor can obtain function description of the service by inquiring the function description information on the service to determine whether it is the requisite service, and the service requestor can format an invoking request in compliance with the interface by inquiring the interface description information on the service.

Although existing services can be used freely and conveniently as a service provision logic of a new service via the creation of a service logic, a new problem may occur during the operation of the service logic: when another service indicated in the service logic fails to provide service, or an original interface invoking request for the service can not be satisfied and thus the service may be unavailable due to a change of the interface of the service, all service combinations invoking the service may be unavailable, which may result in a chain action. Therefore, there is an urgent need of flexible and efficient reuse of existing services in creation of a service in the industry.

In the field of service creation and service combination, a service can typically provide service for the outside world.

### Summary of the Invention

The invention provides a system and method for creating a service, which can improve the efficiency and flexibility of service development and facilitate the simple and rapid development and deployment of a service.

The invention provides a service execution system and method so that an available service is selected dynamically in accordance with the operation of services over an existing network to avoid the problem of unavailability of a combined service due to a failure of a service in the existing network, an interface change, etc.

The invention provides an abstract service mapping system and method to convert an abstract service logic into a specific service logic so as to guarantee an implementation of the abstract service logic.

An embodiment of the service execution system according to the invention executes a service created by the service creation system mentioned above and includes:

a service storage unit, configured to store the service logic created in the service logic edit unit, the service logic including the concrete service logic and the abstract service logic;

a service logic operation unit, configured to obtain a service from the service storage unit in accordance with a request from a requestor and to provide a service for the requestor in accordance with the service logic; and

a service mapping center, configured to convert the abstract service logic operating in the service logic operation unit into a concrete service logic and to return the converted concrete service logic to the service logic operation unit.

An embodiment of the service execution method according to the invention includes:

obtaining a service logic in accordance with a request from a requestor, the service logic comprising a concrete service logic or an abstract service logic created in accordance with a service class in a service class catalog; and

if the service logic is an abstract service logic, converting the abstract service logic into a concrete service logic, and providing a concrete service for the requestor in accordance with the converted concrete service logic.

An embodiment of the service mapping center according to the invention includes:

a mapping control unit, configured to receive an abstract service logic, to invoke and control a service requirement analysis unit, a concrete service mapping unit and a request creation unit to process the abstract service logic, and to create a concrete service logic in accordance with processing results;

the service requirement analysis unit, configured to analyze the abstract service logic received by the mapping control unit and to determine a service class invoked by the abstract service logic in accordance with a currently defined service class catalog;

the concrete service mapping unit, configured to select a concrete service that can fulfill the service class from the service catalog of the existing network based upon the service class determined by the service requirement analysis unit; and

the request creation unit, configured to create an interface invoking file corresponding to the concrete service.

An embodiment of the abstract service logic mapping method according to the invention includes:

determining a service class invoked by an abstract service logic in accordance with defined service classes;

selecting a concrete service that can fulfill the service class from currently accessible concrete services, based upon the service class and a predetermined policy;

obtaining interface information on the concrete service and creating an interface invoking file in accordance with the interface information; and

combining the concrete service and the interface invoking file into a concrete service logic.

As can be seen from the technical solutions according to the invention, the system and method for creating a service according to the invention can support the reuse of existing network services during the creation and the specified invoking of a standard service capability, thereby facilitating the rapid development and deployment of services on the service network. With the service execution system and abstract service mapping system according to the invention, an implementation of operating an abstract combined service logic can be supported and the translation of the abstract service logic can be implemented as needed to create a specific combined service logic, so that the dynamic selection for use can be enabled in view of the operation of the existing network services to avoid effectively the unavailability of the combined service due to a failure of the existing network services, an interface change, etc., and also to ensure the normal operation of the combined service.

### Brief Description of the Drawings

Figure 1 is a block diagram of a first embodiment of the service creation system according to the invention;

Figure 2 is a block diagram of a second embodiment of the service creation system according to the invention;

Figure 3 is an implementation flow chart of a preferred embodiment of the service creation method according to the invention;

Figure 4 is a block diagram of a preferred embodiment of the service execution system according to the invention;

Figure 5 is a flow chart of an embodiment in which the service execution system provides a concrete service for a requestor according to the invention;

Figure 6 is a flow chart of an embodiment in which the service execution system provides an abstract service for a requestor according to the invention;

Figure 7 is a block diagram of a first embodiment of the service logic operation unit in the service execution system according to the invention;

Figure 8 is a block diagram of a second embodiment of the service logic operation unit in the service execution system according to the invention;

Figure 9 is a block diagram of a first embodiment of the service mapping center in the service execution system according to the invention;

Figure 10 is a block diagram of a second embodiment of the service mapping center in the service execution system according to the invention;

Figure 11 is a flow chart of an embodiment in which the service execution system operates an abstract service logic according to the invention;

Figure 12 is an implementation flow chart of a preferred embodiment of the service execution method according to the invention;

Figure 13 is a schematic diagram of networking of an embodiment of providing a service for a requestor by using the system according to the invention;

Figure 14 is a block diagram of a preferred embodiment of the abstract service mapping system according to the invention;

Figure 15 is a block diagram of an embodiment of the service requirement analysis unit in the abstract service mapping system according to the invention;

Figure 16 is a block diagram of an embodiment of the service interface mapping unit in the abstract service mapping system according to the invention; and

Figure 17 is an implementation flow chart of a preferred embodiment of the abstract service mapping method according to the invention.

### Detailed Description of the Invention

According to the invention, in creation of a service logic, existing services and service classes are used as a service provision logic of a new service, so as to create an abstract service logic and to create a combined service, thereby implementing efficient reuse of services. Also, in order to support a mechanism of operating the created abstract service logic, the abstract service logic when being invoked is mapped to a concrete service logic, and then an available and satisfactory service in an existing network is found in accordance with the concrete service logic to provide a corresponding service.

The invention is further described in detail as follows with reference to the drawings and embodiments in order to help those skilled in the art in better understanding of the solutions of the invention.

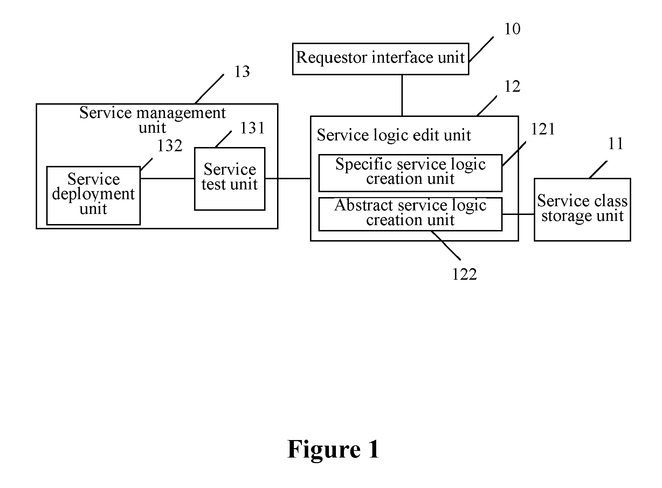

Referring to Figure 1, Figure 1 is a block diagram of the first embodiment of the service creation system according to the invention.

In this embodiment, the service creation system according to the invention includes a requestor interface unit 10, a service class storage unit 11, a service logic edit unit 12, and a service management unit 13. In particular, the requestor interface unit 10 provides an interface via which a service developer interacts with the system; the service class storage unit 11 is configured to store a service class catalog; the service logic edit unit 12 is configured to provide the service developer who accesses the system via the requestor interface unit 10 with service logic edit environments, including script development and interpretation translation environments required for creating a concrete service and a logic edit environment required for creating an abstract service, the logic edit environment being created in accordance with the service class catalog, and to create a required service logic in accordance with an instruction input from the service developer to the requestor interface unit; and the service management unit 13 is configured to test and deploy the service logic created in the service logic edit unit 12 and to create a required service.

The service logic edit unit 12 includes a concrete service logic creation unit 121 and an abstract service logic creation unit 122. In particular, the concrete service logic creation unit 121 is configured to provide the service developer with multilevel Application Programming Interface (API) encapsulation and access modes and to create a concrete service logic in accordance with an instruction input from the service developer to the requestor interface unit 10; and the abstract service logic creation unit 122 is configured to create an abstract service logic in accordance with existing service classes in the service class catalog and an instruction input from the service developer to the requestor interface unit 10.

The service management unit 13 includes a service test unit 131 and a service deployment unit 132. In particular, the service test unit 131 is configured to test a service logic, to analyze the correctness and a boundary condition of the service logic and an influence upon a service deployed on a service application server. Specifically, the analysis of correctness and boundary condition of the service logic refers to a check of whether the service logic is correct in syntax, a determination of whether all parameters required for the service logic are provided, etc., and the influence upon a service deployed on the service application server refers to a possible influence upon the deployed service due to the deployment of the new service, including disability of an old service to operate, an operation error, etc.

The service deployment unit 132 deploys a service logic which passes the test of the service test unit 131 onto the service application server.

The service creation system of the invention can provide a requestor with the requestor interface unit, a simple and convenient service creation environment, and a secure service test environment. With this system, the requestor can create a general concrete service and can also conveniently form a combined service in combination with existing services.

The service developer logs in and interacts with the system via the requestor interface unit 10.

In accordance with information input by the requestor during interaction, the concrete service logic creation unit 121 in the service logic edit unit 12 creates a concrete service logic for the requestor, or the abstract service logic creation unit 122 creates an abstract service logic for the requestor in accordance with the service class catalog stored in the service class storage unit 11.

The service class catalog primarily includes service class information including: a table of current standard service classes, e.g., a location service class, and a weather forecast class; and interface description of each class, e.g., the type and the number of input and output parameters, and whether the parameters are optional. Indeed, the service class catalog can also store other information as required for service applications, e.g., information on a concrete service currently included in a class, and interface description information and service description information related to a concrete service. The information can be obtained cooperatively from the service catalog in the existing network.

The concrete service logic refers to a logic in which a service used is an indicated concrete service. The concrete service logic includes information on a specific interface via which the concrete service is invoked, etc. The abstract service logic refers to a service logic which is described by high abstract-level service logic. In the abstract service logic, the concrete service and the concrete service interface that are used are not specifically indicated. For example, only a "search service" is indicated but it is not indicated whether the search service is provided by a service provider 1 or a service provider 2. Such an abstract service logic when being invoked is not executed directly but converted into a concrete service logic, and a concrete service interface invoking file is created, so that a corresponding service is invoked.

The service logic edit unit 12 provides the service developer with a service logic edit environment when a service is being developed, various API encapsulation and access modes which can be invoked as required by the developer, and predefined script development and interpretation translation environments to enable the developer to develop a service by script writing. In other words, the concrete service logic creation unit 121 can be implemented in various existing ways of creating concrete services.

Additionally, the service logic edit unit 12 can also obtain existing service classes via the service class storage unit 11 to help the service developer develop combined services.

In creation of a service, the developer provides a service requirement to the service logic edit unit 12 via the requestor interface unit 10, the service logic edit unit 12 analyzes the service requirement, checks whether such a class of service is present in the existing services, and if so, creates an abstract service logic; otherwise creates a concrete service logic.

After the edit of the service logic is finished, the service logic edit unit 12 sends the service logic to the service management unit 13. The service test unit 131 tests the service logic, analyzes the correctness and a boundary condition of the service logic, an influence on a deployed service, etc. After the service logic passes the test by the service logic test unit 12, the service deployment unit 132 can deploy the corresponding service logic onto a service logic operation platform or an application server. To meet a special requirement of the service, a negotiation may be performed with a service router and a policy center to deploy a corresponding service trigger point, a service control point, etc.

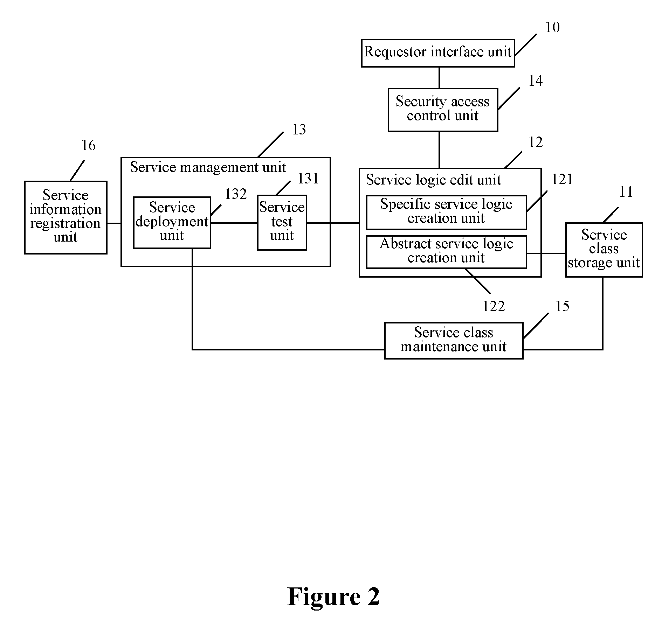

In order to further ensure the security of creating a service, a security access control unit may also be disposed between the requestor interface unit 10 and the service logic edit unit 11. Figure 2 illustrates a second embodiment of the service creation system according to the invention. A security access control unit 14 is responsible for controlling an authority of the service developer by controlling his authority of accessing different service logic edit functions in the service logic edit unit 12 in accordance with a level of the service developer. The authority of the service developer may be controlled by authentication, a digital certificate, a hierarchical authority, etc.

This embodiment also differs from the first embodiment as illustrated in Figure 1 in that a service class maintenance unit 15 is added between the service management unit 13 and the service class storage unit 11, to maintain the service class catalog stored in the service class storage unit 11. After the service deployment unit 132 deploys the new developed service logic onto the service application server, the service class maintenance unit 15 adds the service class into the service class catalog. In this way, if a service logic that the developer needs to create needs the service class, the service class can be inquired in the catalog, thereby facilitating development of a combined service.

The following parameters may be indicated in deployment of a service.

(1) A service class. This information includes a name of a service class and an interface expectation of the service class (optional) indicating expected input and output parameters.

(2) Data flows and control flows between service classes. This information includes services invoking order of service classes and the processing of input and output parameters of each service class.

(3) An abstract state flag of the logic. The flag indicates an abstract state of the service logic. For example:

0: a concrete service logic;

1: a service logic in which a concrete service is indicated without any interface invoking file;

2: a service logic in which a concrete service class is indicated but no concrete service is indicated without any interface invoking file;

3: a service logic in which neither a concrete service class nor a concrete service is indicated without any interface invoking file.

(4) An alternate input parameter. The parameter indicates a corresponding service class and can be supplementary for filling in case of insufficient specific parameters given by a requestor when the service is invoked.

(5) An operation control parameter. The parameter indicates reference data in operation control. In case of timing, for example, a segment of an abstract service logic fails if the operation control parameter of the segment is indicated that a total period of mapping is longer than 10 seconds.

(6) Requestor prompt information, which is prompt information presented to the requestor while the service logic is being operated.

(7) Expected parameters. This expected parameters part indicates a type of parameters, and a comparison against the type is performed when the requestor inputs data so as to determine the validity of requestor input information.

In the above parameters, the parameters of a service class and data flows and control flows between service classes are necessary and the remaining parameters are optional.

Further, there may be additionally disposed in this system a service information registration unit 16 connected with the service management unit 13. The service information registration unit 16 is configured to add information on the service logic deployed onto the service application server into the service catalog of the existing network. The following information may be included in as required.

(1) Interface description information on a service logic (including an input, an output, a communication protocol, etc.), typically a Web Service Description Language (WSDL) description;

(2) Provider information on a service logic, e.g., Provider: AA; Address: XXX;

(3) Description information on a service provided by a service logic, for example, the service provides a corresponding weather forecast, etc., in accordance with an input geographical location;

(4) A class to which the service logic belongs, e.g., a location service class;

(5) A physical address or a logic address of the service application server on which the service logic is deployed, e.g., a Uniform Resource Locator (URL) address.

Indeed, the service application server may provide a registration function. In this case, the information on the created service logic can be added into the service catalog of the existing network directly through the registration function provided by the service application server.

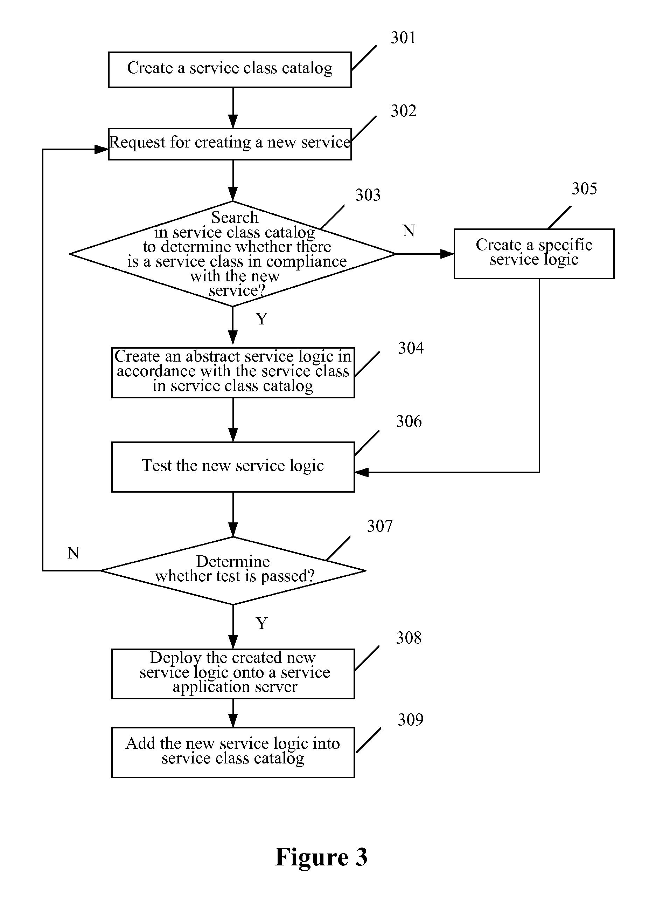

Referring to Figure 3, Figure 3 is an implementation flow of the service creation method according to the invention including the steps as follows.

Step 301: A service class catalog is created.

The service class catalog includes: service class related information and service related information.

The service class related information primarily includes:

1. A table of current standard service classes, e.g., a location service class, and a weather forecast class.

2. Interface description of each class, e.g., a type and the number of input and output parameters, and whether the parameters are optional.

The service related information primarily includes:

1. Interface description information on a service logic (including an input, an output, a communication protocol, etc.), typically a WSDL description;

2. Provider information on a service logic, e.g., Provider: AA; Address: XXX;

3. Description information on a service provided by the service logic, e.g., the service provides a weather forecast in accordance with an input geographical location;

4. A class to which the service logic belongs, e.g., a location service class;

5. A physical address or a logic address of a service application server on which the service logic is deployed, e.g., a URL address.

The above service class related information is necessary information, and the service related information may be selected as required in practice and may be used in combination with the service class of the existing network.

Step 302: It is requested for creating a new service.

Step 303: It is searched in the service class catalog for a service class in compliance with the new service. If such a service class is searched out, the procedure goes to step 304; otherwise the procedure goes to step 305.

Step 304: An abstract service logic is created in accordance with the service class in the service class catalog, and then the procedure goes to step 306.

Firstly, a service class of a concrete service is inquired about in the service class catalog. If so, the concrete service is replaced with the service class and an interface expectation is specified; otherwise the step is skipped.

The above steps are executed repeatedly until all required concrete services in the service logic to be created have been processed.

For example, there is a need of creating a combined service: "Firstly a specific location service A is invoked with an interface invoking file FA, then a specific weather forecast service B is invoked with an interface invoking file FB, and a result is returned".

An inquiry is performed in the service class catalog. If no weather forecast class in compliance with the specific weather forecast service B but a location service class CA is searched out, the specific location service A is replaced with the CA, and an interface expectation XXX for this service class is specified, as a result of which an abstract service logic is created: "Firstly the location service class is invoked with the interface expectation XXX, then the specific weather forecast service B is invoked with the interface invoking file FB, and a result is returned".

Step 305: A concrete service logic is created. For example, a service can be developed by script writing in predefined script development and interpretation translation environments.

Step 306: The new service logic is tested. For example, an operation process is simulated through a predefined test script to determine whether an output is proper.

Step 307: It is determined whether the test is passed. If so, the procedure goes to step 308; otherwise the procedure goes back to step 302 where a new service logic as required is created.

Step 308: The new created service logic is deployed onto the service application server.

In deployment of the service, operation information of the new created service logic is set firstly. The operation information at least includes a service class and data flows and control flows between service classes, and may also include an abstract state flag of the logic, an alternate input parameter, an operation control parameter, etc., which have been previously described in detail. Then, the operation information is written into an association file of the service application server.

Step 309: The information on the new service logic is added into the service class catalog.

After the new service logic is deployed onto the service application server, the information on the new service logic can be added into the service catalog of the existing network for convenience of later use.

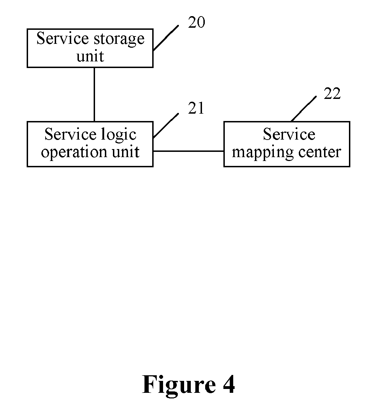

Figure 4 is a block diagram of a preferred embodiment of the service execution system according to the invention.

In this embodiment, the service execution system according to the invention includes: a service storage unit 20, a service logic operation unit 21, and a service mapping center 22. Particularly, the service storage unit 20 is configured to store service logic including a concrete service logic and an abstract service logic; the service logic operation unit 21 is configured to invoke a service in the service storage unit 20 in accordance with a request from a requestor and to provide concrete service in accordance with the service logic; and the service mapping center 22 is configured to convert an abstract service logic operating in the service logic operation unit 21 into a concrete service logic in accordance with an instruction from the service logic operation unit 21.

The service storage unit 20 stores not only a concrete service logic but also an abstract service logic. When the requestor needs provision of a service, firstly the service logic operation unit 21 invokes a service logic in accordance with a request from the requestor. A concrete service logic or just an abstract service logic may be found in accordance with parameters provided by the requestor when the requestor requests for a service, which will be respectively described below.

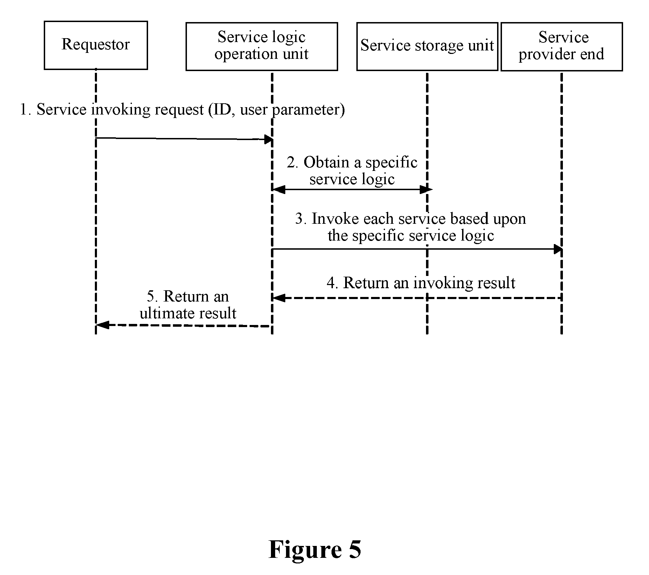

If the combined service requested by the requestor is a concrete service logic, i.e., it is indicated in the service logic that a set of services to be invoked are concrete services (concrete services that can be inquired in the service catalog of the existing network). For example, it is indicated in the combined service logic that "Firstly a location service (a service ID 0001 and a service catalog address 1000) is invoked, and then a search service (a service ID 0002 and the service catalog address 1000) is invoked", where the location service and the search service are two concrete services registered in the service catalog of the existing network. Such a combined service logic when being invoked is not service-mapped by the service mapping center 22, however, the service logic operation unit 21 provides the service for the requestor directly in accordance with the information in the concrete service logic. An embodiment of the implementation flow is illustrated in Figure 5 and includes the following steps.

1. The requestor initiates a service invoking request to the service logic operation unit, the request including information of a service ID, an input parameter, etc.

2. The service logic operation unit obtains a service logic, which is a concrete service logic, from the service storage unit in accordance with a request parameter from the requestor.

3. The service logic operation unit begins to invoke each service sequentially to enable service invoking from a service provider in accordance with a set of concrete services and invoking the services, which are indicated in the concrete service logic.

4. The service provider returns an invoking result.

5. The service logic operation unit returns a final result to the requestor.

The above steps 3 and 4 can be executed for many times.

If the combined service requested by the requestor is an abstract service logic, i.e., it is indicated in the service logic that a set of services to be invoked is not concrete services (concrete services that can be inquired in the service catalog of the service network) but an abstract of concrete services. For example, it is indicated in the combined service logic that "Firstly a location service is invoked, and then a search service is invoked", where the location service and the search service are merely two classes of services but not concrete services. Such a combined service logic when being invoked is service-mapped by the service mapping center 22, so as to convert the abstract service logic into a concrete service logic, and then the service logic operation unit 21 provides the service for the requestor in accordance with the information in the concrete service logic.

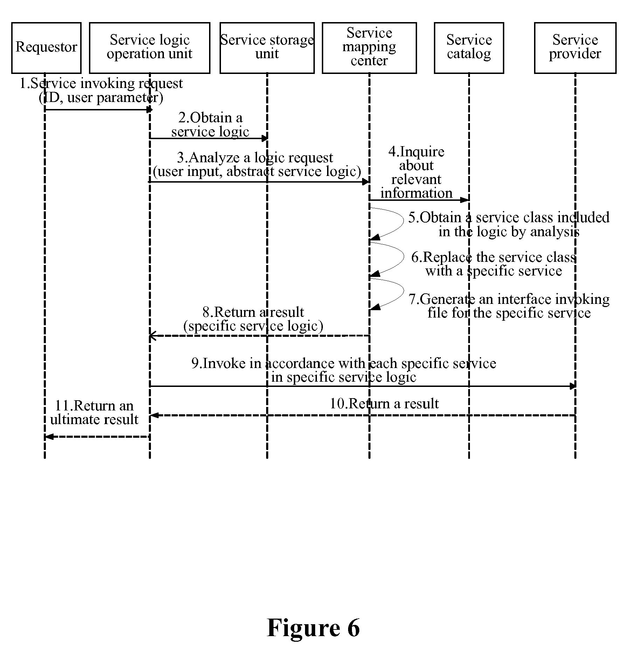

An embodiment of the implementation flow is illustrated in Figure 6 and includes the following steps.

1. The requestor initiates a service invoking request to the service logic operation unit, the request including information on a service ID, an input parameter, etc.

2. The service logic operation unit obtains a service logic, which is an abstract service logic, from the service storage unit in accordance with a request parameter from the requestor.

3. The service logic operation unit sends a logic analysis request to the service mapping center, the request particularly including:

(1) An input parameter of the requestor

(2) The abstract service logic particularly includes the following parameter information:

a) A service class. This information includes a name of a service class and an interface expectation of the service class (optional) indicating expected input and output parameters.

b) Data flows and control flows between service classes. This information includes an operation sequence of service classes and the processing of input and output parameters of each service class.

c) An abstract state flag of the logic. The flag indicates an abstract state of the service logic. For example, 0: a concrete service logic; 1: a service logic in which a concrete service is indicated without any interface invoking file; 2: a service logic in which a concrete service class is indicated but no concrete service is indicated without any interface invoking file; 3: a service logic in which neither a concrete service class nor a concrete service is indicated without any interface invoking file.

d) An alternate input parameter. The parameter indicates a corresponding service class and can be supplementary for filling in case of insufficient specific parameters given by a requestor when the service is invoked.

e) An operation control parameter. The parameter indicates data for reference in operation control. In case of timing, for example, a segment of an abstract service logic fails if the operation control parameter is indicated that a total period of mapping is longer than 10 seconds.

(3) A mapping policy of assisting the service mapping center in mapping can also be included. For example, it is required that a communication protocol for a service in selection of the concrete service in a mapping process should be the HTTP protocol.

4. The service mapping center interacts with the service catalog of the existing network to obtain relevant information on service description, an interface, etc. (this step can be executed separately and is asynchronous with the procedure).

5. The service mapping center analyzes the abstract service logic to obtain a service class included in the logic.

6. The service mapping center maps the service class to a concrete service in accordance with a certain rule.

7. The service mapping center creates a compliant interface invoking request from the relevant information in accordance with an interface specification as required by the concrete service and creates a new service logic which is a concrete service logic in which a concrete service and a corresponding interface invoking file are specified.

The above steps 5 to 7 can be executed optionally in accordance with the abstract state of an abstract service logic being processed. For example, if the abstract state is 2 (a service logic in which a concrete service class is indicated but no concrete service is indicated without any interface invoking file), the step 5 is omitted; and similarly, if the state is 1 (a service logic in which a concrete service is indicated without any interface invoking file), the steps 5 and 6 are omitted.

8. The service mapping center sends an execution result to the service logic operation unit. In this step, the information output from the service mapping center to the service logic operation unit includes information on the concrete service logic, primarily including:

a) Data flows and control flows between concrete services; and

b) An interface invoking file for a concrete service.

In addition to the above parameters, other concrete services that can replace the current one and interface invoking files to the concrete service and report information on execution of the service mapping center may be included.

9. The service logic operation unit begins to invoke each service sequentially from a concrete service provider based upon a set of concrete services and invoking the services, which are indicated in the concrete service logic.

10. The concrete service provider returns an invoking result.

The above steps 9 and 10 can be executed for many times in accordance with the number of concrete services in the concrete service logic.

11. The service logic operation unit 10 returns the invoking result to the requestor.

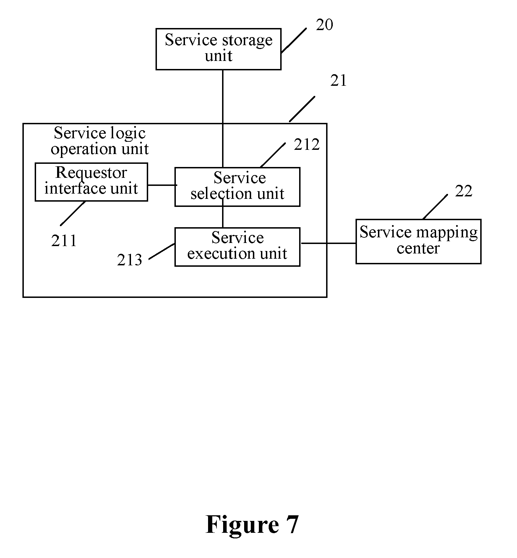

Referring to Figure 7, Figure 7 is a block diagram of a first embodiment of the service logic operation unit in the service execution system according to the invention as illustrated in Figure 4.

The service logic operation unit 21 includes: a requestor interface unit 211, a service selection unit 212, and a service execution unit 213. Particularly, the requestor interface unit 211 provides an interface via which the requestor interacts with the system and obtains a parameter of a service requested by the requestor; the service selection unit 212 is configured to select a service logic in the service storage unit 20 in accordance with the parameter of the service requested by the requestor; and the service execution unit 213 is configured to determine the type of the service logic selected by the service selection unit 212, to access a concrete service logic service directly if it is the concrete service logic, and to invoke the service mapping unit 22 to convert an abstract service logic into a concrete service logic if it is the abstract service and then to access a service corresponding to the concrete service logic.

The above descriptions of Figure 5 and Figure 6 can be referred to for a detailed procedure in which the service logic operation unit 212 provides a service for the requestor, and the procedure is not described here.

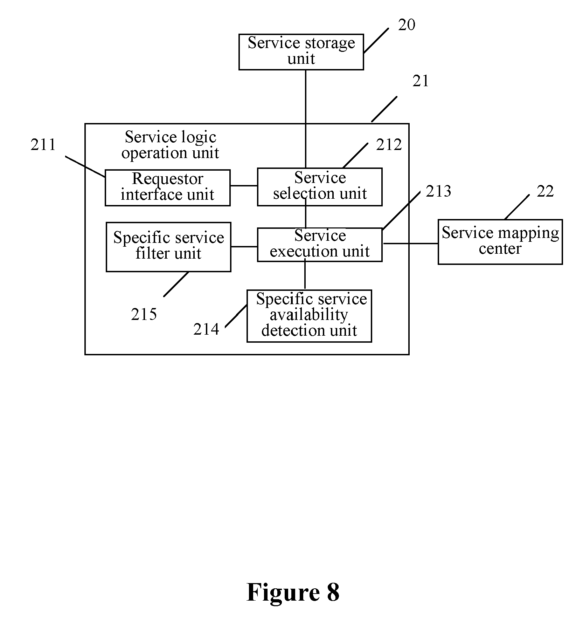

Referring to Figure 8, Figure 8 is a block diagram of a second embodiment of the service logic operation unit in the service execution system according to the invention.

Unlike the embodiment as illustrated in Figure 7, there is added in the service logic operation unit 21 a concrete service availability detection unit 214 configured to detect the availability of a concrete service in a concrete service logic before the concrete service is executed. For example, a state of accessibility of a service (not disconnected, access allowed, etc.) is detected. The detection can be performed by sending a specific detection message to a concrete service. The detection of a concrete service can be performed both in the case that a service per se requested by the requestor is a concrete service and in the case that a service per se requested by the requestor is an abstract service. In the latter case, the service mapping center 22 converts the abstract service logic into a concrete service logic and returns the concrete service logic to the service execution unit, and the service execution unit 213 can invoke the concrete service availability detection unit 214 to detect the availability of the concrete service invoked in the concrete service logic. For example, an HTTP address of a concrete service invoked in the concrete service logic is HTTP://www.MyService, and the availability can be detected by a way of Ping, etc. In another example, an information center where a current service state (active and sleep) is registered is present on the network, and the availability of the service may be obtained by inquiring in the center. The concrete service availability detection unit 214 returns a detection result to the service execution unit 213, and the service execution unit 213 can decide whether to select the concrete service in accordance with the detection result.

In order to further select a satisfactory concrete service, a concrete service filter unit 215 may also be disposed in the service logic execution unit 21 so as to determine whether to invoke a concrete service in a concrete service logic in accordance with a preset filter policy before the concrete service is executed and to determine whether to use a returned result of the concrete service after the concrete service is invoked. The concrete service filter unit 215 returns a result to the service execution unit 213 and the service execution unit 213 can decide whether to use the concrete service in accordance with the result.

Before or after a concrete service is invoked, whether to invoke the concrete service can be decided in accordance with a preset filter policy (for example, a provider of the service should be AA, and an address of the service should be within an address range XXX-XXX). If the concrete service is selected, invoking is performed normally; and if the concrete service can not be invoked, another candidate concrete service may be selected. Candidate concrete services may be those returned from the service mapping center 22 to the service logic operation unit 21 after an abstract service logic is mapped to a concrete service logic or may be obtained by invoking again a corresponding unit of the service mapping unit 22.

The preset filter policy may also be configured to check whether an invoking satisfies a preset condition. For example, it is required that a period to operate a concrete service shall not exceed 3 seconds, and this condition is unsatisfied if a concrete service times out. At this time, an invoking failure may be returned to the requestor, or a result of invoking the concrete service may be cancelled and a candidate concrete service may be selected and invoked again.

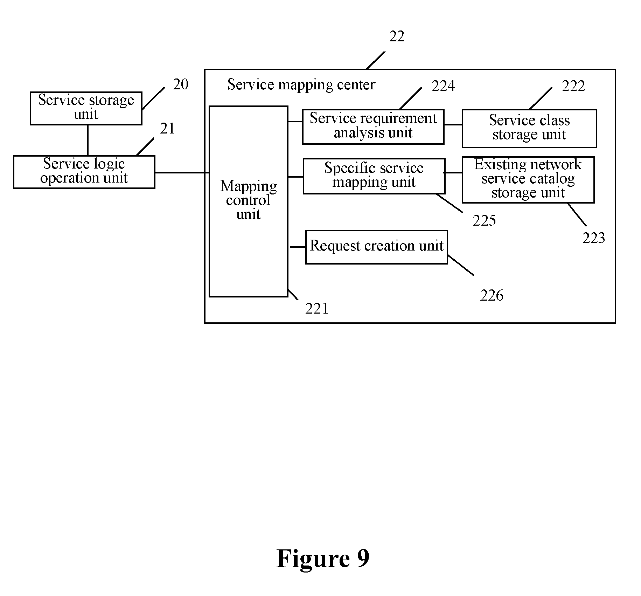

Referring to Figure 9, Figure 9 is a block diagram of a first embodiment of the service mapping center in the service execution system according to the invention.

The service mapping center 22 includes: a mapping control unit 221, a service class storage unit 222, an existing network service catalog storage unit 223, a service requirement analysis unit 224, a concrete service mapping unit 225, and a request creation unit 226. Particularly, the mapping control unit 221 is configured to receive an abstract service logic from the service logic operation unit 21; the service class storage unit 222 is configured to store a currently defined service class catalog; the existing network service catalog storage unit 223 is configured to store the service catalog in the existing network; the service requirement analysis unit 224 is configured to analyze an abstract service logic received by the mapping control unit 221 under the control of the mapping control unit 221 and to determine a service class invoked by the abstract service logic in accordance with the currently defined service class catalog; the concrete service mapping unit 225 finds out a concrete service that can fulfill the service class from the service catalog of the existing network to replace the service class, based upon the service class obtained by the service requirement analysis unit 224 under the control of the mapping control unit 221; and the request creation unit 226 is configured to create an interface invoking file corresponding to information on the concrete service under the control of the mapping control unit 221. Then, the mapping control unit 221 combines the concrete service and its corresponding interface invoking file into a concrete service logic (i.e., a service logic in which a concrete service to be invoked and an interface invoking file for the concrete service are indicated).

The service requirement analysis unit 224 analyzes an abstract service logic to obtain service classes invoked in the logic. The service classes are stored in the service class catalog in the service class storage unit 222. For example, a segment of service logic is "obtain the current location of 13590305088 and send a weather forecast to him in accordance with his location", and then the service requirement analysis unit 224 analyzes to obtain two service classes present in the service: a location service class and a weather forecast service class.

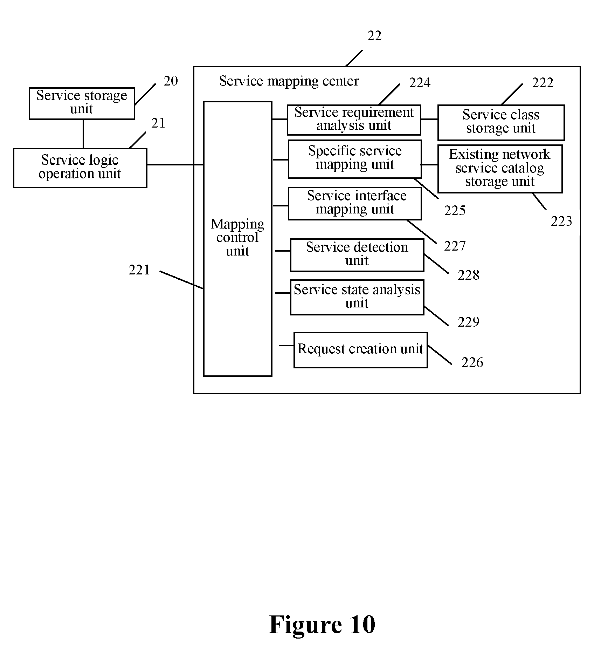

Referring to Figure 10, Figure 10 is a block diagram of a second embodiment of the service mapping center in the service execution system according to the invention.

Unlike the embodiment illustrated in Figure 9, a service interface mapping unit 227, a service detection unit 228, and a service state analysis unit 229 are added in this embodiment, wherein:

The service interface mapping unit 227 obtains interface information on a concrete service based upon the concrete service determined by the concrete service mapping unit 225 under the control of the mapping control unit 221, performs service interface match in accordance with the information, determines whether an input, an output, an invoking manner and a communication protocol for the service are satisfactory and then returns a mapping result to the mapping control unit 221, and the mapping control unit 221 decides whether to select the concrete service in accordance with the mapping result.

The service interface mapping unit 227 inquires about interface information on the concrete service, e.g., WSDL, in the service catalog in the existing network, based upon the concrete service specified by the concrete service mapping unit 225; inquires (in the service catalog) about state information on the service (including information on whether the current service is activated, whether the service is in a roaming state, a geographical domain where the service is implemented, etc.), and adapts a protocol used for invoking the service based upon a certain policy in accordance with the state information on the service, e.g., the Simple Object Access Protocol (SOAP)/HTTP; adapts an invoking manner, e.g., whether to store a session state, the interaction manner is a request plus a response, or a request but no response, etc.; adapts an interface format, e.g., whether parameters in the existing service logic can fulfill an interface requirement for service adaptation, and whether an output of the service can fulfill an output parameter requirement in the service logic. For example, the following policy is adopted: the service is not selected if the service state is roaming. In another example, selection is prohibited if the interactive protocol required for the service is the HTTP.

The service detection unit 228 is configured to detect whether the concrete service is currently available in accordance with an instruction from the mapping control unit 221. For example, if the HTTP address of the concrete service invoked in the concrete service logic is HTTP://www.MyService, the service detection unit 228 can detect the accessibility in a way of Ping, etc, and returns a detection result to the mapping control unit 221. The mapping control unit 221 determines whether to select the concrete service in accordance with the detection result.

The service state analysis unit 229 is configured to determine a current state of the concrete service in accordance with an instruction from the mapping control unit 221, the state including whether the service is activated, whether the service is in a roaming state, a geographical domain where the service is implemented. For example, the service state analysis unit 229 inquires a service state maintenance part of a service provider node over the network about current state (available or unavailable) information on the service, and returns an analysis result to the mapping control unit 221. The mapping control unit 221 can decide whether to select the concrete service in accordance with the analysis result.

In a practical application, the service interface mapping unit 227, the service detection unit 228, and the service state analysis unit 229 may be optional as required, and may be invoked by the mapping control unit 221 before or after the service interface mapping unit 227 obtains the interface information on the concrete service.

When the service logic operation unit 21 needs to operate an abstract service logic, the following two ways may be adopted.

In one way, corresponding function units (the service requirement analysis unit 224, the concrete service mapping unit 225, and the service interface mapping unit 227) in the service mapping unit 22 are invoked respectively under the control of the service logic operation unit 21 to implement pertinent service mapping. For example, if an invoked concrete service has been indicated in an abstract service logic without any corresponding interface invoking file, the service logic operation unit 21 controls to invoke only the request creation unit 226 so as to create a corresponding interface invoking file.

In the other way, the service logic operation unit 21 transports an abstract service logic to the service mapping center 22, and service mapping is implemented under the control of the mapping control unit 221 in the service mapping center 22, creating a specific combined service logic and an interface adaptation request.

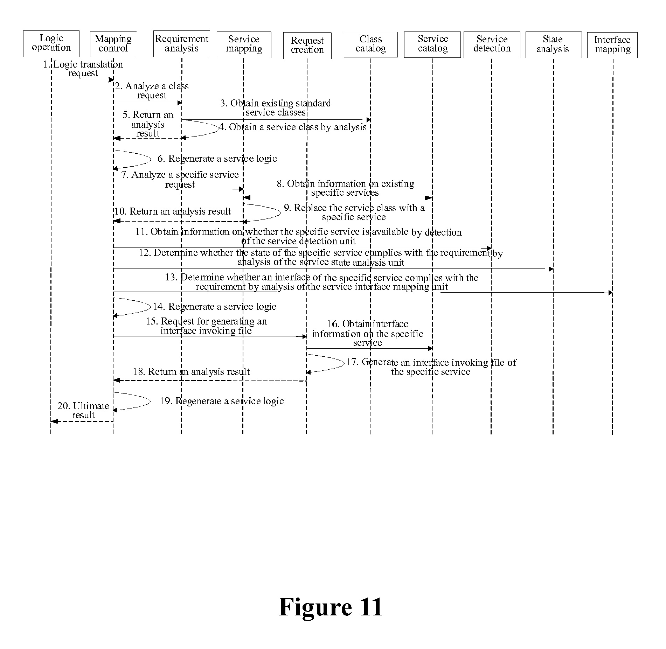

Figure 11 illustrates a flow chart of an embodiment of the service mapping in the second way including the following steps.

1. The service logic operation unit transports an abstract service logic to the service mapping center. For example, a segment of service logic is "obtain the current location of 13590305088 and send a weather forecast to him in accordance with his location".

2. The mapping control unit of the service mapping center sends a service class analysis request to the service requirement analysis unit.

3. The service requirement analysis unit obtains existing standard service classes by inquiring the service class catalog.

4. The service requirement analysis unit analyzes and compares the given abstract service logic with the existing standard service classes (which can be obtained by inquiring the service class catalog) to obtain service classes included in the abstract service logic. Here, operations to be executed include: analyzing the service classes given in the service logic to obtain service classes corresponding to the existing service classes, which analysis is performed by name match in combination with the interface expectation match technique, etc. For example, two service classes in the service are obtained by the analysis: a location service class and a weather forecast service class.

5. The service requirement analysis unit returns an analysis result to the mapping control unit.

6. The mapping control unit recreates a service logic based upon the analysis result, which is an abstract service logic in which a concrete service class is specified. For example, the location of 13590305088 is obtained in accordance with the location service class and is input as a parameter to the weather forecast service class, and a result of the weather forecast service class is returned.

7. The mapping control unit sends to the concrete service mapping unit a request for analyzing a concrete service based upon a service class. The request includes the service classes obtained in the previous steps and may optionally carry some parameters required for facilitating selection of a concrete service, requestor given time parameters, etc.

8. The concrete service mapping unit obtains information on existing concrete services by inquiring the service catalog of the existing network.

9. The concrete service mapping unit analyzes and compares the abstract service logic created by the mapping control unit in which concrete service classes are specified with the existing concrete services (which can be obtained by inquiring the service catalog of the existing network), and selects concrete services to replace the service classes in the abstract service logic. For example, the location service class and the weather forecast service class are mapped to a specific location service LocationService_A and a weather forecast service WeatherForcast_A.

10. The concrete service mapping unit returns the analysis result to the mapping control unit.

11. The mapping control unit requests the service detection unit for detecting whether the concrete services obtained by the concrete service mapping unit are available, and decides whether to adopt the concrete services (step 14) or to invoke again the concrete service mapping unit while requesting for excluding the concrete services (step 7) based upon a result returned from the service detection unit.

12. The mapping control unit requests the service state analysis unit for analyzing whether states of the concrete services obtained by the concrete service mapping unit fulfill the requirement, and decides whether to adopt the concrete services (step 14) or to invoke again the concrete service mapping unit while requesting for excluding the concrete services (step 7) based upon a result returned from the service state analysis unit.

13. The mapping control unit requests the service interface mapping unit for analyzing whether information on interfaces of the concrete services obtained by the concrete service mapping unit satisfies the requirement, and decides whether to adopt the concrete services (step 14) or to invoke again the concrete service mapping unit while requesting for excluding the concrete services (step 7) based upon a result returned from the service interface mapping unit.

The above steps 11, 12 and 13 are optional and may be out of order. In practical operation, the steps 11, 12 and 13 may be performed after the concrete service mapping unit returns a concrete service or may be performed as requested by the concrete service mapping unit in selection among a plurality of concrete services fulfilling service classes.

14. The mapping control unit recreates a service logic based upon the analysis result, which is a concrete service logic in which a concrete service to be invoked is specified. For example, the location of 13590305088 is obtained in accordance with the location service LocationService_A and is input as a parameter to the weather forecast service WeatherForecast_A, and a result of the weather forecast service WeatherForecast_A is returned.

15. The mapping control unit sends to the request creation unit a request for creating an interface invoking file for the concrete service based upon a concrete service inquiry. The request includes the concrete services obtained in the previous steps, parameters specified and required for use in interface invoking, and a requestor input parameter.

16. The request creation unit obtains interface description information on the existing concrete services by inquiring the service catalog of the existing network.

17. The request creation unit analyzes the given concrete service and the interface description information on the service (which is obtained by inquiring the service catalog of the existing network), and creates an interface invoking file for the concrete service in accordance with an interface requirement of the concrete service. For example, for a format requirement of an interface file for the specific location service LocationService_A, it is filled with the parameter "13590305088" and other parameters to create a specific interface invoking file, and then for a format requirement of an interface file for the specific weather forecast service WeatherForcast_A, it is filled with the parameter "13590305088" and other parameters to create a specific interface invoking file.

18. The request creation unit returns the result to the mapping control unit.

19. The mapping control unit, based upon the analysis result, recreates a service logic which is a concrete service logic in which a concrete service to be invoked and an interface invoking file required for use in invoking the service are specified. For example, an interface invoking file 1 is adopted in accordance with the location service LocationService_A to obtain the location of 13590305088, an interface invoking file 2 is adopted to input the location as a parameter to the weather forecast service WeatherForecast_A, and a result of the weather forecast service WeatherForecast_A is returned.

20. The mapping control unit returns the created concrete service logic to the service logic operation unit.

In the above step 4, the service requirement analysis unit should analyze the abstract service logic and the service classes in the existing service class catalog, and replace the service class in the abstract service logic with a selected standard service class in accordance with the abstract service logic and the service classes in the existing service class catalog. Numerous specific implementations are possible, as described below by way of an example.

It is assumed that a service logic transported to the service requirement analysis unit is illustrated in Table 1 as below.

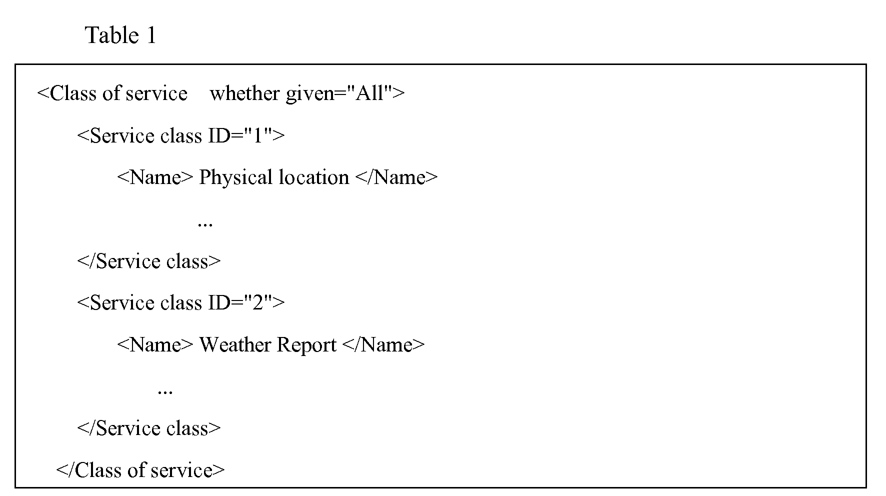

The first way: precise match

A determination is made by completely and precisely matching the service classes in the service class catalog with the given service class. In this example:

Physical location! = Location service, resulting in no match.

The second way: creating a synonymy database

A synonymy database is created as illustrated in Table 2 as below:

**Table 2**

| Primary name | Synonymy 1 | Synonymy 2 | ... | ... |
|---|---|---|---|---|
| Location service | Location requested | Physical location | ... | ... |

In this example, Physical location is a synonymy of Location service. The original class is replaced with a match result to create a service logic.

The service logic after mapping by the service requirement analysis unit is illustrated in Table 3 below.

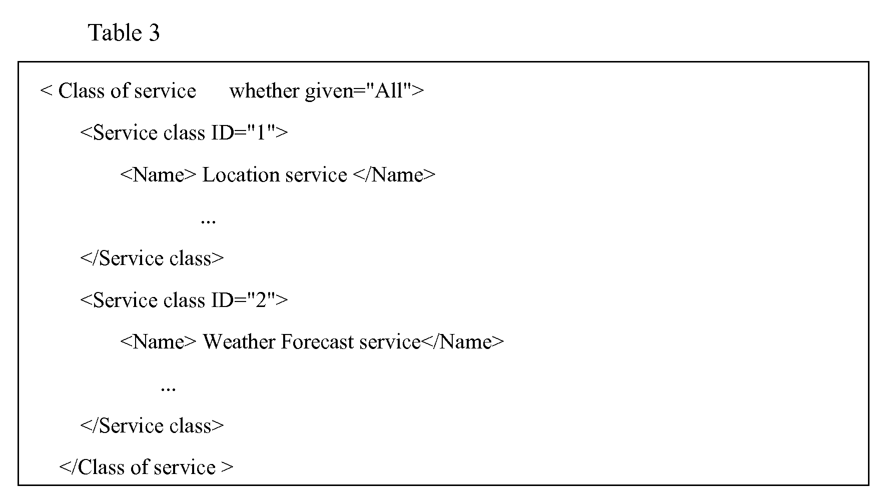

In the above way, an interface expectation of a service class may be further used for defining the match, i.e., in the match, both the name of a service class and an interface expectation of the service class should be matched.

For example, the service logic transported to the concrete service mapping unit is illustrated in Table 4 as below.

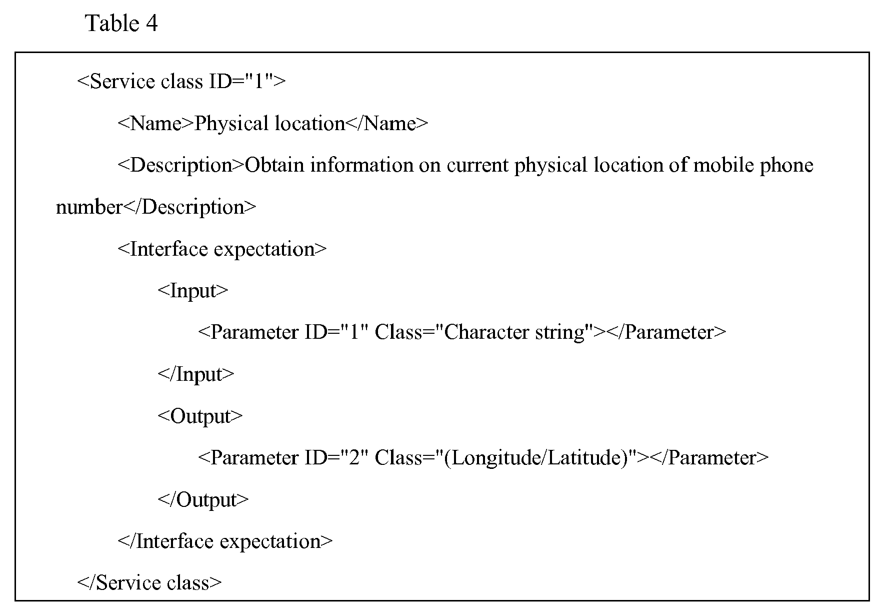

An existing service class is illustrated in Table 5 as below.

**Table 5**

| Primary name | Synonymy 1 | Synonymy 2 | Interface expectation 1 | | ... |
|---|---|---|---|---|---|
| | | | Input | Output | |
| Location service | Location requested | Physical location | Type: character string | Type: | ... |
| | | | | (Longitude/Latitude) | |

Physical location==Location service (Synonymy 2);

Interface expectation (Input) matches and interface expectation (output) matches;

Therefore all are in match.

The service logic after mapping by the service requirement analysis unit is illustrated in Table 6 as below.

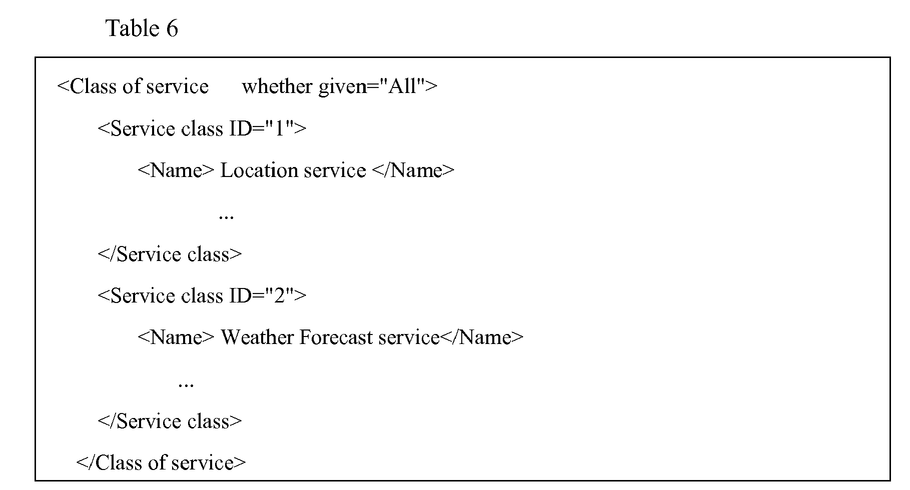

In the above step 9, the concrete service mapping unit analyzes and compares the abstract service logic created by the mapping control unit in which the concrete service class is specified with the existing concrete services (which can be obtained by inquiring the service catalog of the existing network), and replaces the service classes in the service logic with selected concrete services. A result as continued from the above example is illustrated in Table 7 as below.

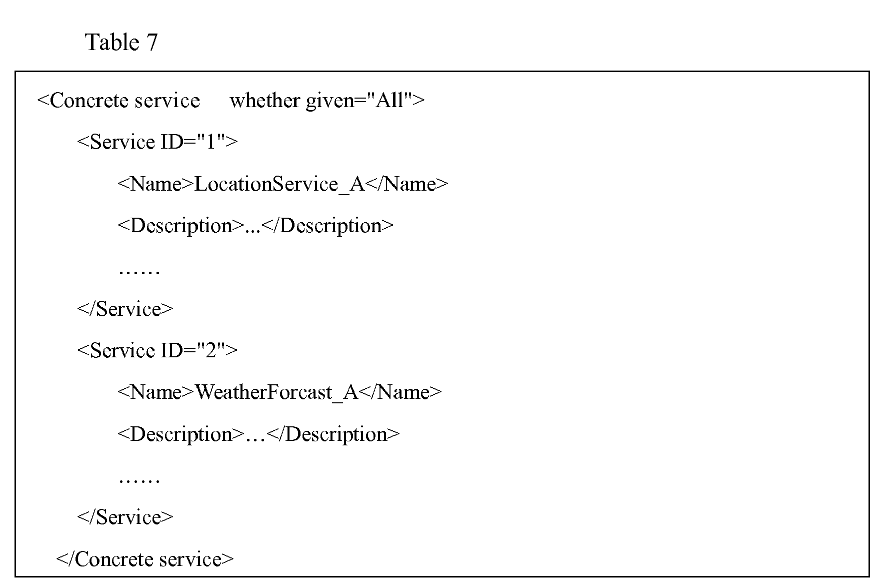

The request creation unit analyzes the given concrete service and the interface description information on the service (which is obtained by inquiring the service catalog of the existing network), and creates an interface invoking file for the concrete service in accordance with an interface requirement of the concrete service. A specific procedure of creating the interface invoking file in accordance with the interface information on the concrete service includes the following steps.

(1) A message format is created in accordance with an interactive protocol format as required in the interface information (for example, if the SOAP is required, an SOAP format is created);

(2) Operation fields in a request message body are created in accordance with operation names in the interface information; and

(3) In accordance with an input parameter format of the operation in the interface information, an interface invoking file is created from a requestor input parameter, an output parameter placeholder invoked in a previous concrete service (unnecessary for the first concrete service) and an alternate input parameter (filled if necessary) in a format dependent upon the operation fields added sequentially in the step (2).

For example, the interface information on the location service is:

An interface description file of LocationService_A (taking the WSDL as an example) is as follows.

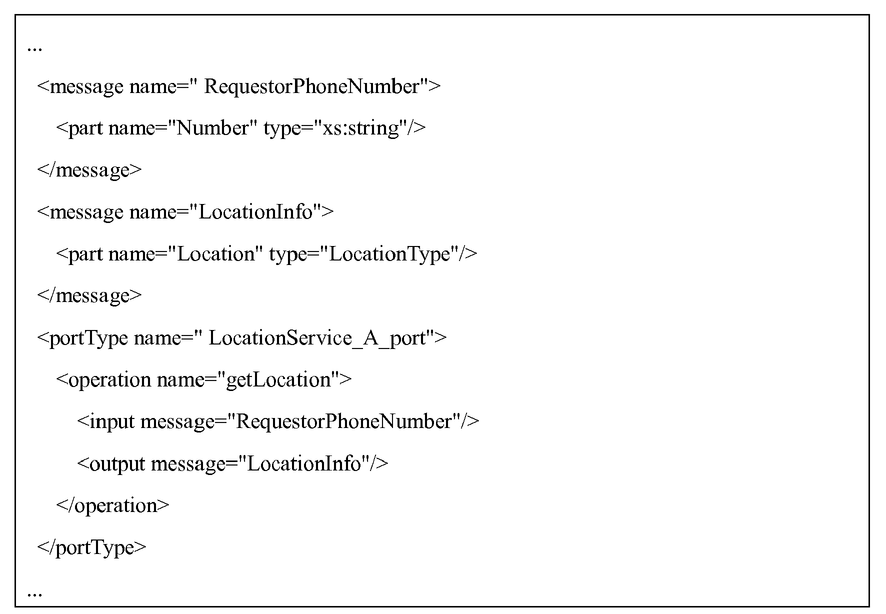

An SOAP invoking format is created as required after the step (1):

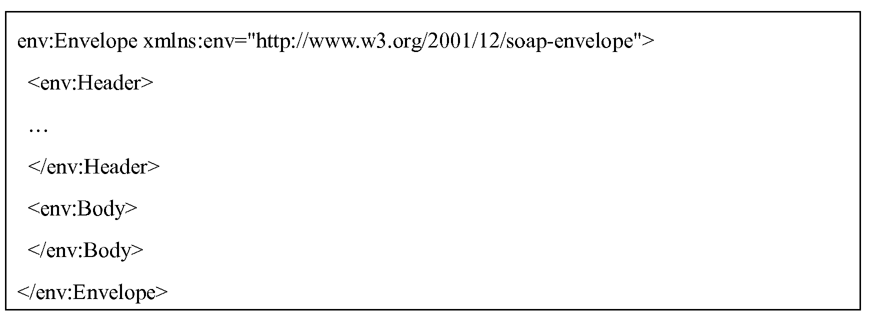

An operation field (getLocation) is created in the message body after the step (2):

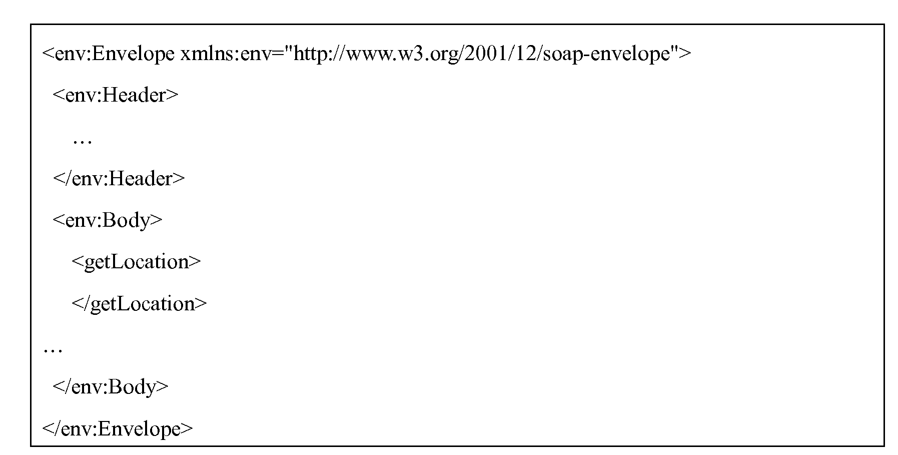

The interface invoking file for LocationService_A created after the step (3) is as follows.

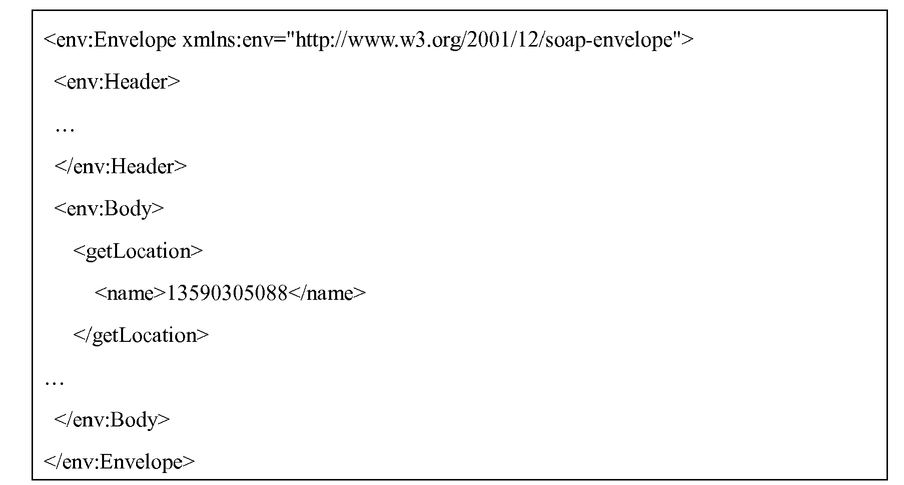

If the concrete service is not the first service to be invoked in the service logic and an output from invoking of another service is required as an input, the corresponding placeholder is added in the step (3). For example, an interface invoking file of the weather forecast service after the location service is created as follows.

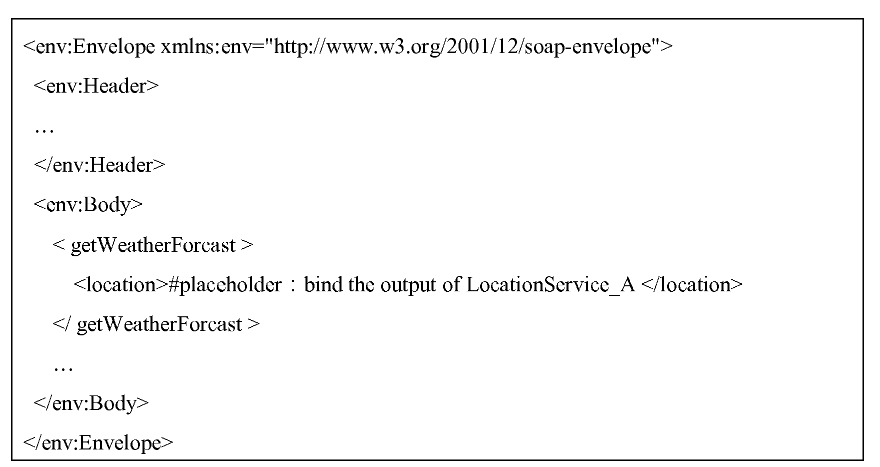

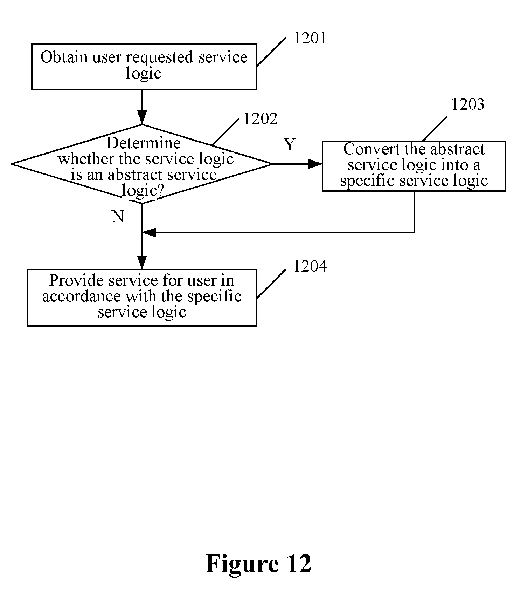

Referring to Figure 12, Figure 12 illustrates an implementation flow chart of the service execution method according to the invention including the following steps.

Step 1201: A service logic requested by a requestor is obtained.

Step 1202: It is determined whether the service logic is an abstract service logic. If so, the procedure goes to step 1203; otherwise the procedure goes to step 1204.

Step 1203: The abstract service logic is converted into a concrete service logic.

Firstly, a service class invoked by the abstract service logic is determined in accordance with defined service classes; then, a concrete service that can fulfill the service class in currently accessible concrete services is selected based upon the service class and a predetermined policy; and finally, an interface invoking file is created in accordance with interface information on the concrete service, and the concrete service and the interface invoking file are combined into a concrete service logic.

Step 1204: a service is provided for the requestor in accordance with the concrete service logic.

Before the concrete service in the concrete service logic is performed, the availability of the concrete service in the concrete service logic may be detected before the concrete service is executed in order to ensure provision of reliable service for the requestor. Further, whether to invoke the concrete service may be determined in accordance with a preset filter policy, and whether to use a returned result of the concrete service may be determined after the concrete service is invoked. These two procedures are performed out of order and may also be optional as required.

With the system of the invention, various services, particularly the service of a combined service can be provided conveniently for the requestor.

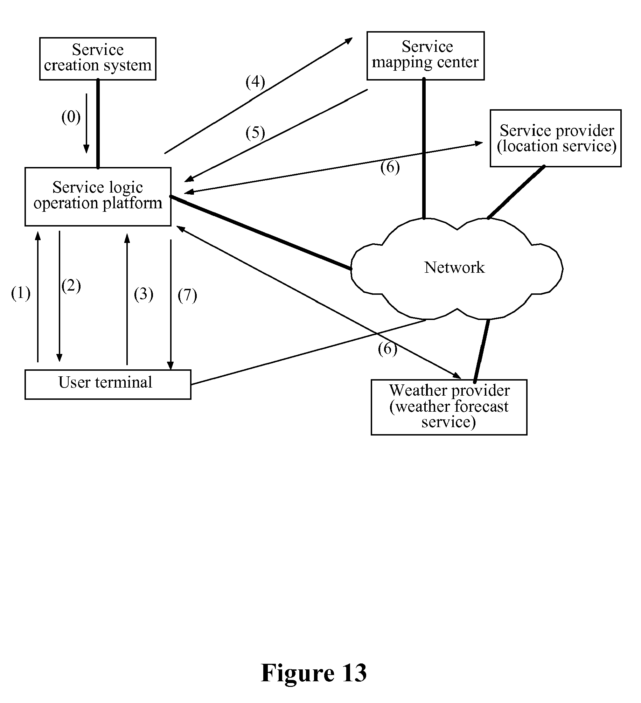

Referring to Figure 13, it is a schematic diagram of a networking embodiment of providing a service for a requestor with the system of the invention. In this illustrated example, a procedure in which a combined service provides a service for the requestor by obtaining weather information in accordance with a mobile phone number of the requestor includes the following steps.

(0) the service creation system creates and sends a segment of abstract service logic to a service logic operation platform, and this procedure is for creation and deployment of the service logic and will not be performed in the later practical operation of the service. This segment of logic is illustrated by way of an example as follows.

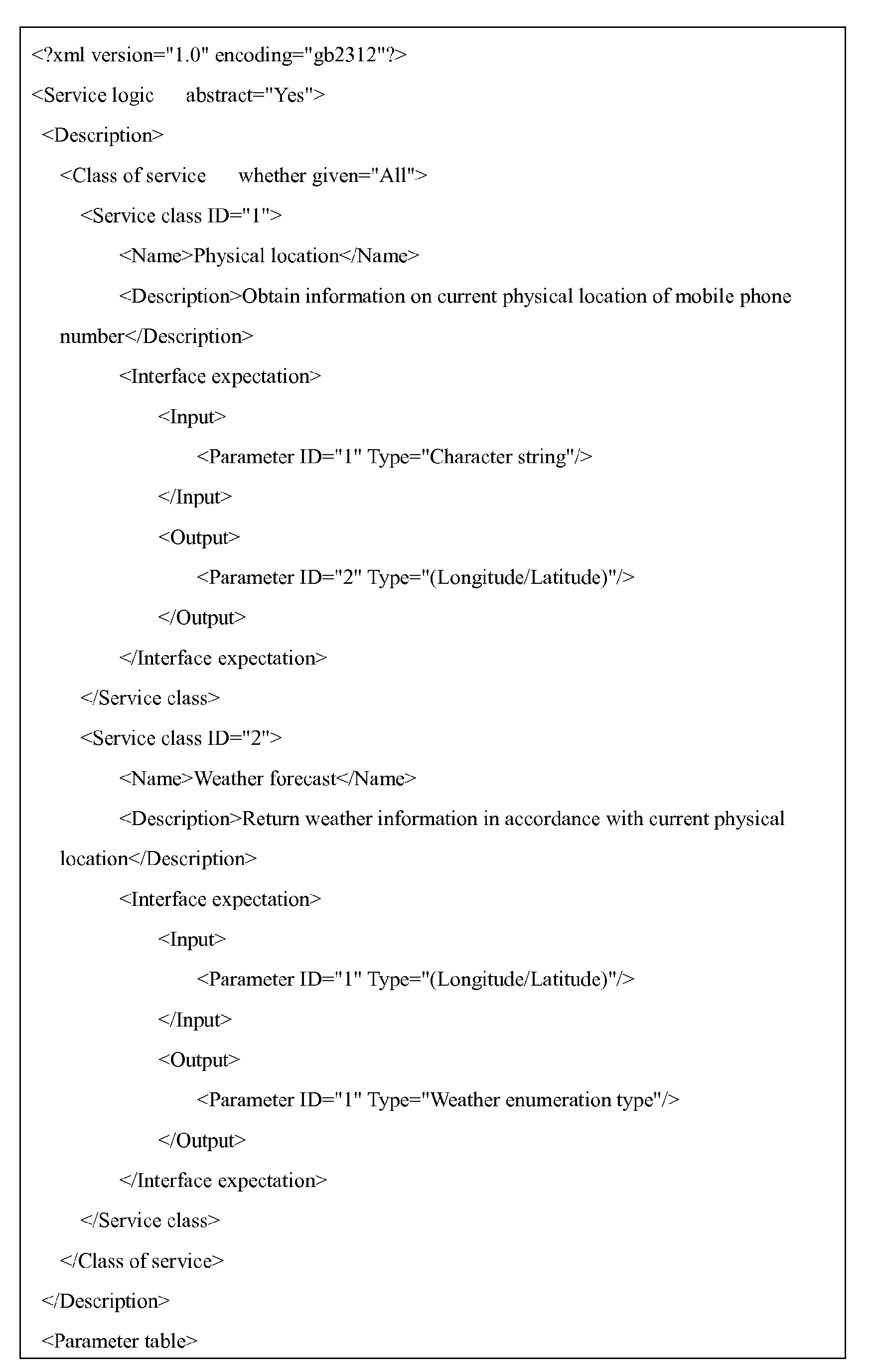

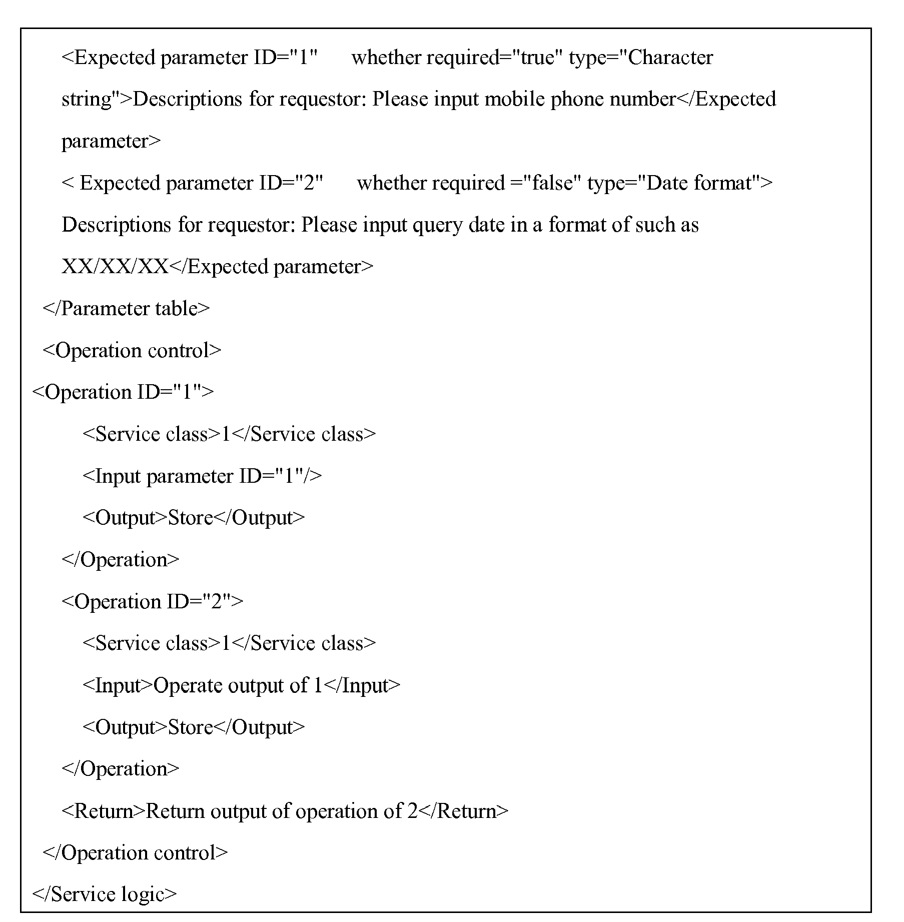

(1) A requestor terminal is connected to the service logic operation platform via the network and requests for the combined service.

(2) The service logic operation platform requests the requestor for inputting information (expected parameters) in accordance with the service logic.

(3) The requestor inputs a parameter (13590305088).

(4) The service logic operation platform discovers that the service is an abstract service logic, and then sends the requestor input information and the original abstract service logic to the service mapping center and requests for mapping it to a concrete service logic.

The requestor input parameter and the original abstract logic can be sent in combination for example as follows.

Replace the original:

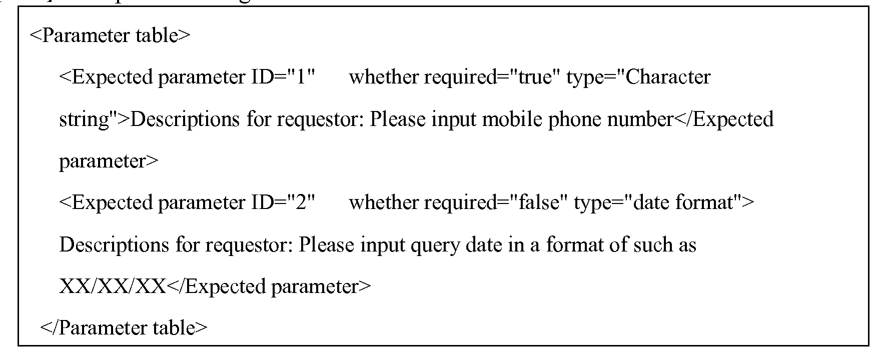

With:

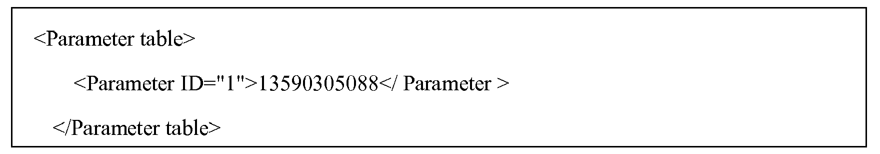

(5) The service mapping center returns a mapping result to the service logic operation platform.

(6) The service logic operation platform invokes a service in accordance with the prescription of the concrete service logic.

(7) The service logic operation platform returns a final result to the requestor.

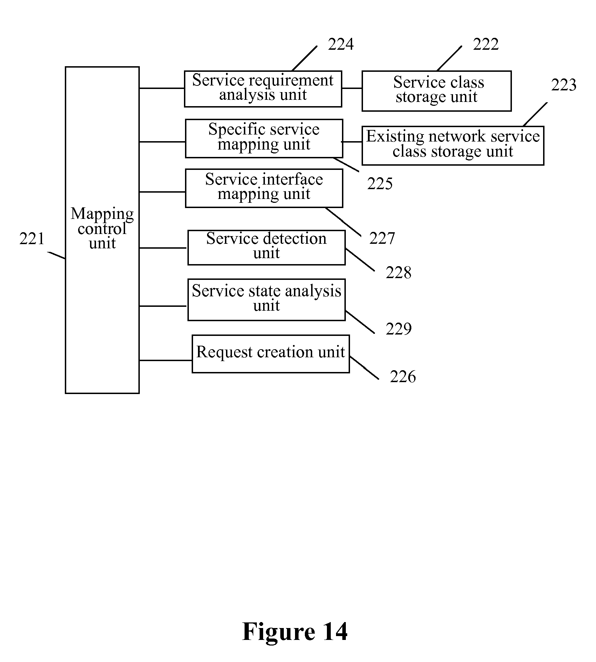

In order to enable various abstract services to be operated normally, the invention further provides an abstract service mapping system. Figure 14 illustrates a block diagram of a preferred embodiment of the abstract service mapping system according to the invention.

The system includes a mapping control unit 221, a service class storage unit 222, an existing network service catalog storage unit 223, a service requirement analysis unit 224, a concrete service mapping unit 225, and a request creation unit 226. Particularly, the mapping control unit 221 is configured to receive an abstract service logic from the service logic operation unit. The service class storage unit 222 is configured to store a currently defined service class catalog. The existing network service catalog storage unit 223 is configured to store a service catalog in the existing network. The service requirement analysis unit 224 is configured to analyze the abstract service logic received by the mapping control unit 221 under the control of the mapping control unit 221, and to determine a service class invoked by the abstract service logic in accordance with the currently defined service class catalog. The concrete service mapping unit 225, based upon the service class obtained by the service requirement analysis unit 224, selects a concrete service that can fulfill the service class from the service catalog of the existing network under the control of the mapping control unit 221. The request creation unit 226 is configured to create an interface invoking file corresponding to the concrete service under the control of the mapping control unit 221.

Additionally, the abstract service mapping system according to the invention may further include a service interface mapping unit 227, a service detection unit 228 and a service state analysis unit 229. These three units may be optional to make the concrete service logic to which the abstract service logic is mapped more effective.

In particular, the service interface mapping unit 227, connected with the mapping control unit 221, obtains interface information on a concrete service based upon the concrete service determined by the concrete service mapping unit 225 under the control of the mapping control unit 221, performs service interface match in accordance with the information, determines whether an input, an output, an invoking manner and a communication protocol for the service are satisfactory and then returns a mapping result to the mapping control unit 221. The mapping control unit 221 decides whether to select the concrete service in accordance with the mapping result.

The service detection unit 228 is configured to detect whether the concrete service is currently available whether in accordance with an instruction from the mapping control unit 221. For example, after an address of the concrete service is obtained, whether the service is normal is determined by attempting to connect with the address, and a detection result is returned to the mapping control unit 221. The mapping control unit 221 determines whether to select the concrete service in accordance with the detection result.

The service state analysis unit 229 is configured to determine a current state of the concrete service in accordance with an instruction from the mapping control unit 221, the states including whether the service is activated, whether the service is in a roaming state, and a geographical domain where the service is located. For example, there exists an information center with which a current state of the service (activated or sleep) is registered on the network, and whether the service is available may be obtained by inquiring the center. Also, whether the service is in a roaming state is determined by inquiring information provided by a service provider, and an analysis result is returned to the mapping control unit 221. The mapping control unit 221 decides whether to select the concrete service in accordance with the analysis result.

The service requirement analysis unit 224 analyzes an abstract service logic to obtain service classes invoked in the logic, and these service classes are stored in the service class catalog in the service class storage unit 222. For example, a segment of service logic is "Obtain the current location of 13590305088 and send a weather forecast to him in accordance with his location". In this case, the service requirement analysis unit obtains two service classes present in the service: a location service class and a weather forecast service class.

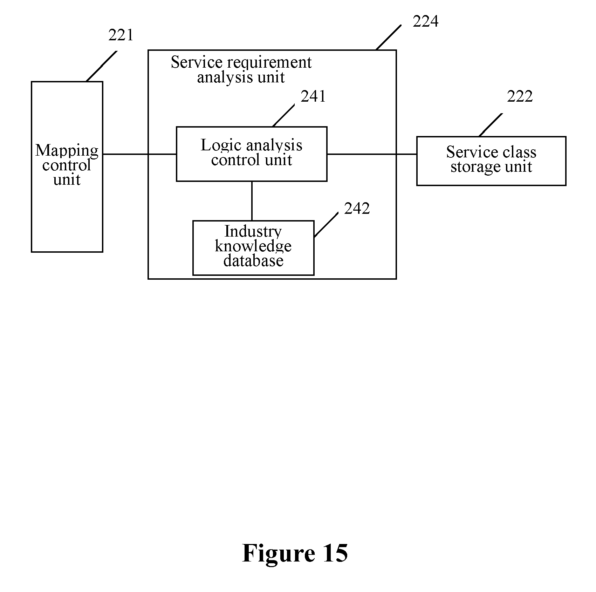

A block diagram of an embodiment of the service requirement analysis unit 224 in Figure 14 is as illustrated in Figure 15.

The service requirement analysis unit 224 includes: a logic analysis control unit 241 and an industry knowledge database 243. Particularly, the industry knowledge database 242 is configured to store industry semantic information. The logic analysis control unit 241 is configured to analyze whether the abstract service logic gives a service class; if the abstract service logic gives a service class, the logic analysis control unit 241 searches in the service class catalog and converts the given service class into a same class of service class defined in the service class catalog; and if the abstract service logic does not give any service class, logic analysis control unit 241 determines a service class of the abstract service logic in accordance with the industry semantic information in the industry knowledge database.

A procedure of analyzing the service class of the abstract service logic is as follows.

1. Firstly, the logic analysis control unit analyzes whether the given abstract service logic gives a service class;

2. If a service class is given, the logic analysis control unit 241 inquires the service class catalog to determine whether the given service class has a same or equivalent class in the service class catalog, and if so, determines the service class;

3. If no service class is given, the logic analysis control unit 241 interacts with the industry knowledge database to analyze the service class in accordance with a predetermined policy, e.g., a policy of strict service match, a policy without any semantic class analysis, etc.

Particularly, the following two methods may be used for class analysis.

a) A simple analysis is performed on the abstract service logic, and an attempt is made to replace a part of the abstract service logic with a class present in the service class catalog. This method is applicable in the case that the manner of a service is indicated simply in the abstract service logic. For example, it is assumed that the abstract service logic is as illustrated in Table 7 below.

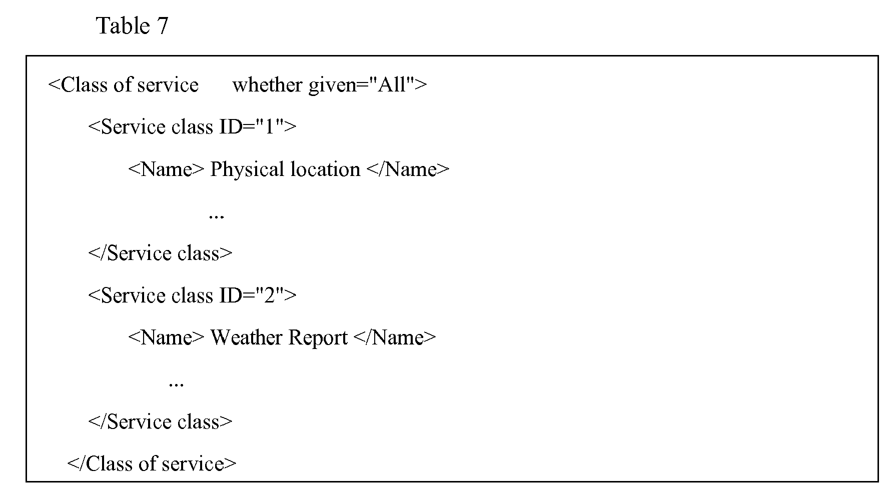

Two service classes are present in the service class catalog.

**Table 8**

| | |
|---|---|
| Primary name | ... |
| Location service | ... |
| Weather forecast service | ... |

The first way: precise match

A determination is made by completely and precisely matching the service classes in the existing service class catalog with the given service class. In this example:

Physical location! = Location service, resulting in no match.

The second way: creating a synonymy database

A synonymy database is created as illustrated in Table 9 below:

**Table 9**

| Primary name | Synonymy 1 | Synonymy 2 | ... | ... |
|---|---|---|---|---|
| Location service | Location requested | Physical location | ... | ... |

In this example, Physical location is a synonymy of Location service, resulting in a match.

In the above way, an interface expectation of a service class may be further used for defining the match, i.e., in the match, both the name of a service class and an interface expectation of the service class should be matched.

For example, an abstract service logic is as illustrated in Table 10 below.

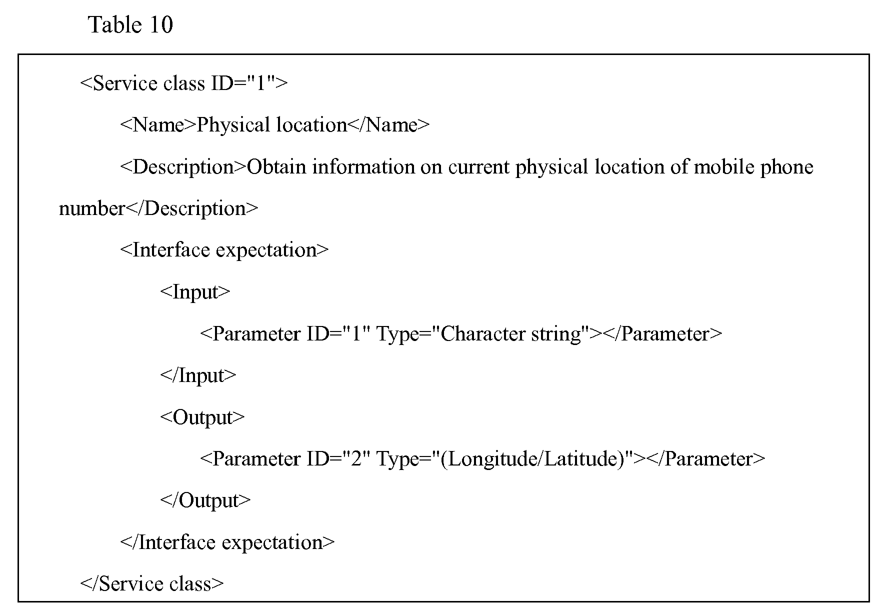

An existing service class catalog is as illustrated in Table 11 below.

**Table 11**

| Primary name | Synonymy 1 | Synonymy 2 | Interface expectation 1 | | ... |
|---|---|---|---|---|---|
| | | | Input | Output | |
| Location service | Location requested | Physical location | Type: character string | Type: | ... |
| | | | | (Longitude/Latitude) | |

Physical location==Location service (Synonymy 2);

Interface expectation (Input) match and interface expectation (output) match;

Therefore all are in match.

b) A semantic analysis is performed on the abstract service logic and interaction is performed with the industry knowledge database (where industry semantic information is stored) to achieve higher accuracy.

4. Through the above analysis in a) and b), the abstract service logic is converted into a service logic in which a concrete service class is indicated. For example, <Location service> means obtaining the current location of 13590305088, and <Weather forecast service> means sending a weather forecast to him in accordance with his location.

The concrete service mapping unit 225 selects a concrete service that can fulfill the specified service class, based upon the service class obtained by the service requirement analysis unit 224 and a certain policy. In the selection, the concrete service may be selected from the currently accessible concrete service catalog stored in the existing network service catalog storage unit 223. Alternatively, the concrete service may be obtained by inquiring the service catalog in the existing network under a certain condition.

For example, the location service in the above example may be a specific location service provided by a concrete service provider 1, etc.

In such a procedure of performing an abstract service, each time an abstract combined service is invoked, the service mapping center can create a specific combined service logic. Specific combined services may not necessarily be the same. For example, LocationService_A is invoked in a specific combined service logic created for a previous service request, and when LocationService_A fails, a specific combined service logic which invokes LocationService_B may be created in the present service invoking, thereby avoiding unavailability of the combined service due to the failure of LocationService_A.

A procedure in which the concrete service mapping unit 225 analyzes a concrete service in an abstract service logic is as follows.

1. Firstly, the concrete service mapping unit access the service catalog of the existing network to obtain a concrete service in compliance with a class in the service logic, where a plurality of concrete services are possible;

2. The obtained concrete services are filtered, and an interface expectation may be used in the filtering process;

3. The filtered services (which may be a plurality of services) are respectively mapped sequentially.

The service interface mapping unit 226 inquires the service catalog of the existing network based upon the concrete service specified by the concrete service mapping unit 225 to obtain interface information on the concrete service, e.g., the WSDL (a Web service is described in a form of a set of ports); inquires (the service catalog) about state information of the service (including information on whether the current service is activated, whether the current service is in a roaming state, and a geographical domain where the service is located, etc.), and adapts a protocol used for invoking of the service based upon a certain policy in accordance with the state information of the service, e.g., the Simple Object Access Protocol (SOAP)/Hypertext Transfer Protocol (HTTP); adapts an invoking manner, e.g., whether to store a session state, the type of a request being the request plus a response, or no response; adapts an interface format, e.g., whether parameters in a currently provided service logic can adapt an interface requirement for service, and whether an output of the service can fulfill an output parameter requirement in the service logic.

For example, the following policy is adopted: the service is not selected when the service state is in a roaming state. In another example, selection is prohibited when the interactive protocol required for the service is the HTTP.

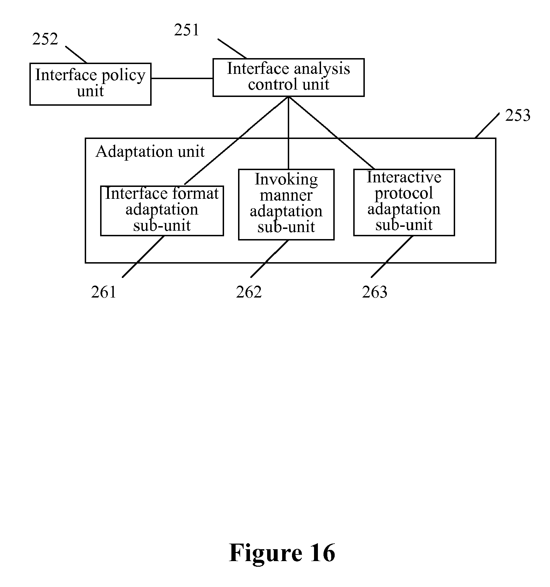

Figure 16 illustrates a block diagram of an embodiment of the service interface mapping unit in the abstract service mapping system according to the invention.

The service interface mapping unit includes: an interface analysis control unit 251, an interface policy unit 252, and an adaptation unit 253. Particularly, the interface analysis control unit 251 is configured to obtain a concrete service determined by the concrete service mapping unit, to invoke the interface policy unit 252 and the adaptation unit 253, and to return to the mapping control unit a mapping result to make the mapping control unit decide whether to select the concrete service in accordance with processing results from the interface policy unit 252 and the adaptation unit 253; the interface policy unit 252 provides a policy of selecting a concrete service and determines whether the concrete service is available in accordance with the policy; and the adaptation unit 253 adapts the available concrete service determined by the interface policy unit 252.

The adaptation unit 253 includes: an interface format adaptation sub-unit 261, an invoking manner adaptation sub-unit 262, and an interactive protocol adaptation sub-unit 263. Particularly, the interactive protocol adaptation sub-unit 263 is configured to determine whether an interactive protocol used for the concrete service complies with an interactive protocol required for a current service in accordance with relevant information on the concrete service, and if not, to adapt the interactive protocol used for the concrete service in accordance with the interactive protocol required for the current service; the invoking manner adaptation sub-unit 262 is configured to determine an invoking manner used for the concrete service in accordance with the relevant information on the concrete service; and the interface format adaptation sub-unit 261 is configured to determine whether an interface parameter of the concrete service complies with an interface parameter required for the current service in accordance with the relevant information on the concrete service, and if not, to adapt an interface used for the concrete service in accordance with the interface parameter required for the current service.

In adaptation of an interface format, an interface file of the concrete service shall be analyzed to determine whether the currently given parameter matches an input condition required for an abstract service logic and whether an output satisfies the requirement of the abstract service logic. For example, an input condition required for the abstract service logic is a weather enumeration type parameter, while an input parameter specified in an interface file of the found specific weather forecast service WeatherForecast_A is a character string type of a mobile phone number. In this case, the requirement can not be satisfied.

Invoking manners of a service may include the following items:

<Request-Response type>, i.e., a request is accepted and a response can be returned;

<Request only-No response type>, i.e., a request is accepted but no response will be returned;

<No request-Response type>, i.e., a response will be returned without the need of accepting a request.

Therefore, in adaptation of an invoking manner, it should be determined whether an invoking manner given by a concrete service satisfies the network requirement. For example, a response shall be returned for a weather forecast, but the specific weather forecast service WeatherForecast_A is in a <Request only-No response type> and therefore can not be used.

In adaptation of an interactive protocol, it should be determined whether an interactive protocol of a concrete service satisfies the requirement in accordance with an interactive protocol required for current network devices. For example, an interactive protocol of the required specific weather forecast service is the HTTP, but the interactive protocol of the current specific weather forecast service WeatherForecast_A is the SOAP and therefore does not fulfill the requirement.

A procedure in which the service interface mapping unit maps a service interface includes the following steps.

1. Firstly, the service interface mapping unit accesses the service catalog of the existing network to obtain information on a service and specific interface information.

2. State information on the service is extracted from the obtained service information and is filtered in accordance with a predetermined policy.

3. It is determined whether a currently selected service is available and accessible. The accessibility may be performed in a way of detection such as sending a specific message to a service provider.

4. It is determined whether the required interactive protocol, invoking manner, interface format, etc., are satisfied;

5. It is determined whether the concrete service is selectable and an ultimate service invoking request file is created.

The above steps 1 to 5 are out of order and may be performed as required, and some steps of them may be performed in accordance with a certain policy.

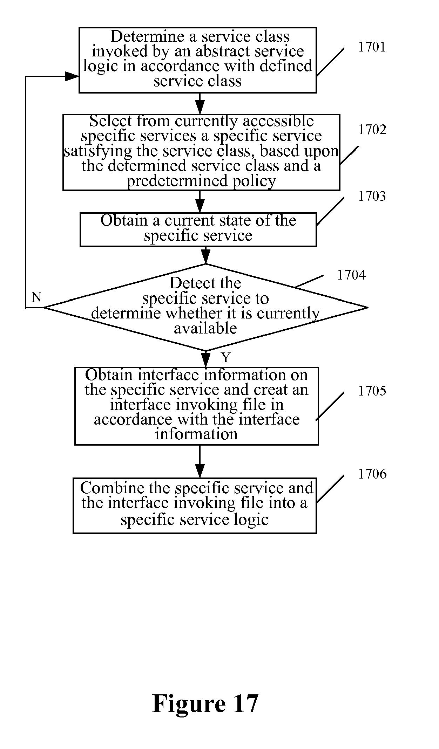

Referring to Figure 17, Figure 17 is an implementation flow chart of a preferred embodiment of the abstract service mapping method according to the invention including the following steps.

Step 1701: A service class invoked by an abstract service logic is determined in accordance with defined service classes.

Step 1702: A concrete service, which can fulfill the service class, is selected from currently accessible concrete services based upon the determined service class and a predetermined policy.

Step 1703: A current state of the concrete service is obtained, including whether the service is activated, whether the service is in a roaming state, and a physical domain where the service is located.

Step 1704: The concrete service is detected to determine whether it is currently available. If it is available, the procedure goes to step 1705; otherwise the procedure goes back to step 1701.

Step 1705: Interface information on the concrete service is obtained and an interface invoking file is created in accordance with the interface information.

Step 1706: The concrete service and the interface invoking file are combined into a concrete service logic.

As can be seen from the technical solutions according to the embodiments of the invention, the service creation system and method according to the embodiments of the invention can support the reuse of existing network services during the creation and the specified invoking of a standard service capability, thereby facilitating rapid development and deployment of a service on the service network. With the service execution system and abstract service mapping system according to the embodiments of the invention, an implementation of operating an abstract combined service logic can be supported, the translation of the abstract service logic can be performed as needed to create a specific combined service logic, so that the existing network services can be selected for use dynamically in consideration of their operations, thereby effectively avoiding unavailability of the combined service due to a failure of an existing network service, an interface change, etc., and also ensuring the normal operation of the combined service.

It shall also be noted that those ordinarily skilled in the art can appreciate that all or part of the steps in the above methods according to the embodiments can be accomplished by instructing related hardware in accordance with programs which can be stored in computer readable storage medium, such as ROM/RAM, a magnetic disk, and an optical disk.

Although the invention is described by way of the embodiments, it is apparent to those ordinarily skilled in the art that various modifications and variations can be made to the invention within the scope of the invention, and it is intended that the appended claims encompass these modifications and variations.

## Claims

1. A service execution method, comprising:
obtaining a service logic in accordance with a request from a requestor, the service logic comprising a concrete service logic or an abstract service logic; and
if the service logic is an abstract service logic, converting the abstract service logic into a concrete service logic, and providing a concrete service for the requestor in accordance with the converted concrete service logic.

2. The method according to claim 1, wherein the step of converting the abstract service logic into a concrete service logic comprises:
selecting a concrete service that can fulfill the requirement to replace the service class invoked by the abstract service logic from currently concrete services;
creating invoking information for the concrete services;
creating a concrete service logic in accordance with the concrete service and the invoking information; and,
providing a concrete service for the requestor in accordance with the concrete service logic.

3. The method according to claim 2, wherein the selecting a concrete service that can fulfill the requirement to replace the service class invoked by the abstract service logic from currently concrete services comprises:
determining a service class invoked by the abstract service logic in accordance with predefined service classes; and
selecting a concrete service that can fulfill the requirement to replace the service class invoked by the abstract service logic from currently accessible concrete services, based upon the service class and a predetermined policy.

4. The method according to claim 3, wherein the creating invoking information for the concrete services comprises:
obtaining interface information on the concrete service and creating an interface invoking file in accordance with the information.

5. The method according to claim 1, wherein before providing a concrete service for the requestor, the method further comprises:
detecting the availability of the concrete service in the concrete service logic; and wherein before providing a concrete service for the requestor, the method further comprises:
determining whether to invoke the concrete service in accordance with a preset filter policy and determining whether to use a returned result of the concrete service after the concrete service is invoked.

6. The method according to claim 1, wherein the abstract service logic comprises the following parameter information: a service class and data flows and control flows between service classes.

7. The method according to claim 1, wherein the concrete service logic comprises the following parameter information: data flows and control flows between concrete services and interface invoking files for the concrete services.

8. The method according to claim 1, wherein if the abstract logic indicates a required concrete service without any interface invoking file, the step of converting the abstract service logic into a concrete service logic comprises:
obtaining interface information on the concrete service and creating an interface invoking file in accordance with the interface information; and
combining the required concrete service and the interface invoking file into a concrete service logic.

9. The method according to claim 1, wherein if the abstract service logic indicates a required concrete service class with no concrete service and no interface invoking file, the step of converting the abstract service logic into a concrete service logic comprises:
selecting a concrete service that can fulfill the service class from currently accessible concrete services, based upon the service class and a predetermined policy;
obtaining interface information on the concrete service and creating an interface invoking file in accordance with the information; and
combining the concrete service and the interface invoking file into a concrete service logic.

10. A service mapping center, comprising:
a mapping control unit, configured to receive an abstract service logic, to invoke and control a service requirement analysis unit, a concrete service mapping unit and a request creation unit to process the abstract service logic, and to create a concrete service logic in accordance with processing results;
the service requirement analysis unit, configured to analyze the abstract service logic received by the mapping control unit and to determine a service class invoked by the abstract service logic in accordance with a currently defined service class catalog;
the concrete service mapping unit, configured to select a concrete service that can fulfill the service class from the service catalog of the existing network based upon the service class determined by the service requirement analysis unit; and
the request creation unit, configured to create an interface invoking file corresponding to the concrete service.

11. The service mapping center according to claim 10, further comprising:
a service interface mapping unit, configured to map an interface of the concrete service and to return to the mapping control unit a mapping result to make the mapping control unit decide whether to select the concrete service.

12. The service mapping center according to claim 11, wherein the service interface mapping unit comprises:
an interface analysis control unit, configured to obtain the concrete service determined by the concrete service mapping unit, to invoke an interface policy unit and an adaptation unit, to return to the mapping control unit a mapping result to make the mapping control unit decide whether to select the concrete service in accordance with processing results of the interface policy unit and the adaptation unit;
the interface policy unit, configured to provide a policy of selecting the concrete service and to determine whether the concrete service is available in accordance with the policy; and
the adaptation unit, configured to adapt the available concrete service determined by the interface policy unit.

13. The service mapping center according to claim 12, wherein the adaptation unit comprises:
an interactive protocol adaptation sub-unit, configured to determine whether an interactive protocol used for the concrete service complies with an interactive protocol required for a current service in accordance with relevant information on the concrete service, and if not, to adapt the interactive protocol used for the concrete service in accordance with the interactive protocol required for the current service;
an invoking manner adaptation sub-unit, configured to determine an invoking manner used for the concrete service in accordance with the relevant information on the concrete service; and
an interface format adaptation sub-unit, configured to determine whether an interface parameter of the concrete service complies with an interface parameter required for the current service in accordance with the relevant information on the concrete service, and if not, to adapt an interface used for the concrete service in accordance with the interface parameter required for the current service.

14. The service mapping center according to claim 10, wherein the service requirement analysis unit comprises:
an industry knowledge database, configured to store industry semantic information; and
a logic analysis control unit, configured to analyze whether the abstract service logic gives a service class; if the abstract service logic gives a service class, to search in the service class catalog and convert the given service class into a same class of service class defined in the service class catalog; and if the abstract service logic does not give any service class, to determine a service class of the abstract service logic using the industry semantic information in the industry knowledge database.

15. A service execution system for executing the service, comprising a service mapping center as any one of claims 10-14 and further comprising
a service storage unit, configured to store the concrete service logic and the abstract service logic created in the service logic edit unit; and
a service logic operation unit, configured to obtain a service from the service storage unit in accordance with a request from a requestor and to provide a service for the requestor in accordance with the service logic.

16. The system according to claim 15, wherein:
the service mapping center converts the abstract service logic operating in the service logic operation unit into a concrete service logic in accordance with an instruction from the service logic operation unit, wherein the instruction comprises a requestor input parameter and abstract service logic parameters, the abstract service logic parameters comprise a service class and data flows and control flows between service classes; and
the concrete service logic returned from the service mapping center to the service logic operation unit comprises the following parameter information: data flows and control flows between concrete services and an interface invoking file for the concrete service.

17. The system according to claim 16, wherein the service logic operation unit comprises:
a requestor interface unit, configured to provide an interface via which the requestor interacts with the system and to obtain a parameter of a requestor requested service;
a service selection unit, configured to select the service logic in the service storage unit in accordance with the parameter of the requestor requested service obtained by the requestor interface unit; and
a service execution unit, configured to determine the type of the service logic selected by the service selection unit; if the service logic is a concrete service logic, to access the service directly; and if the service logic is an abstract service logic, to invoke the service mapping unit to convert the abstract service logic into a concrete service logic, to execute the concrete service logic and provide a service for the requestor.

18. An abstract service logic mapping method, comprising the steps of:
determining a service class invoked by an abstract service logic in accordance with defined service classes;
selecting a concrete service that can fulfill the service class from currently accessible concrete services, based upon the service class and a predetermined policy;
obtaining interface information on the concrete service and creating an interface invoking file in accordance with the interface information; and
combining the concrete service and the interface invoking file into a concrete service logic.
